(19) Europäisches Patentamt
European Patent Office
Office européen des brevets

(11) EP 1 506 591 B1

(12) # EUROPÄISCHE PATENTSCHRIFT

(45) Veröffentlichungstag und Bekanntmachung des Hinweises auf die Patenterteilung:
**29.11.2006 Patentblatt 2006/48**

(21) Anmeldenummer: **03727465.1**

(22) Anmeldetag: **12.05.2003**

(51) Int Cl.:
***H01M 8/10*** *(2006.01)* ***C08J 5/22*** *(2006.01)*
***B01D 71/40*** *(2006.01)*

(86) Internationale Anmeldenummer:
**PCT/EP2003/004914**

(87) Internationale Veröffentlichungsnummer:
**WO 2003/096465 (20.11.2003 Gazette 2003/47)**

(54) **POLYMERELEKTROLYTMEMBRAN, VERFAHREN ZU DEREN HERSTELLUNG UND DEREN ANWENDUNG IN BRENNSTOFFZELLEN**

POLYMER ELECTROLYTE MEMBRANE, METHOD FOR THE PRODUCTION THEREOF, AND APPLICATION THEREOF IN FUEL CELLS

MEMBRANE ELECTROLYTE POLYMERE, PROCEDE DE PRODUCTION DE CETTE MEMBRANE ET SON UTILISATION DANS DES PILES A COMBUSTIBLE

(84) Benannte Vertragsstaaten:
**AT BE BG CH CY CZ DE DK EE ES FI FR GB GR HU IE IT LI LU MC NL PT RO SE SI SK TR**

(30) Priorität: **10.05.2002 DE 10220818**

(43) Veröffentlichungstag der Anmeldung:
**16.02.2005 Patentblatt 2005/07**

(73) Patentinhaber: **Pemeas GmbH**
**65926 Frankfurt am Main (DE)**

(72) Erfinder:
- **KIEFER, Joachim**
**66679 Losheim am See (DE)**
- **UENSAL, Oemer**
**55128 Mainz (DE)**

(74) Vertreter: **Luderschmidt, Schüler & Partner Patentanwälte**
**Industriepark Höchst,**
**Gebäude F 821**
**65926 Frankfurt (DE)**

(56) Entgegenhaltungen:
**US-A- 4 012 303** **US-A- 5 656 386**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 506 591 B1

## Beschreibung

Die vorliegende Erfindung betrifft eine protonenleitende Polymerelektrolytmembran auf Basis von organischen Polymeren, die mittels einer Strahlenbehandlung vorbehandelt und dann mit Vinylphosphonsäure oder mit Vinylphosphonsäure und Vinylsulfonsäure gepfropft sind und die aufgrund ihrer hervorragenden chemischen und thermischen Eigenschaften vielfältig eingesetzt werden können, insbesondere als Polymer-Elektrolyt-Membran (PEM) in sogenannten PEM-Brennstoffzellen.

Eine Brennstoffzelle enthält üblicherweise einen Elektrolyten und zwei durch den Elektrolyten getrennte Elektroden. Im Fall einer Brennstoffzelle wird einer der beiden Elektroden ein Brennstoff, wie Wasserstoffgas oder ein Methanol-Wasser-Gemisch, und der anderen Elektrode ein Oxidationsmittel, wie Sauerstoffgas oder Luft, zugeführt und dadurch chemische Energie aus der Brennstoffoxidation direkt in elektrische Energie umgewandelt. Bei der Oxidationsreaktion werden Protonen und Elektronen gebildet.

Der Elektrolyt ist für Wasserstoffionen, d.h. Protonen, aber nicht für reaktive Brennstoffe wie das Wasserstoffgas oder Methanol und das Sauerstoffgas durchlässig.

Eine Brennstoffzelle weist in der Regel mehrere Einzelzellen sogenannte MEE's (Membran-Elektroden-Einheit) auf, die jeweils einen Elektrolyten und zwei durch den Elektrolyten getrennte Elektroden enthalten.

Als Elektrolyt für die Brennstoffzelle kommen Feststoffe wie Polymerelektrolytmembranen oder Flüssigkeiten wie Phosphorsäure zur Anwendung. In jüngster Zeit haben Polymerelektrolytmembranen als Elektrolyte für Brennstoffzellen Aufmerksamkeit erregt. Prinzipiell kann man zwischen 2 Kategorien von Polymermembranen unterscheiden.

Zu der ersten Kategorie gehören Kationenaustauschermembranen bestehend aus einem Polymergerüst, welches kovalent gebunden Säuregruppen, bevorzugt Sulfonsäuregruppen enthält. Die Sulfonsäuregruppe geht unter Abgabe eines Wasserstoffions in ein Anion über und leitet daher Protonen. Die Beweglichkeit des Protons und damit die Protonenleitfähigkeit ist dabei direkt an den Wassergehalt verknüpft. Durch die sehr gute Mischbarkeit von Methanol und Wasser weisen solche Kationenaustauschermembranen eine hohe Methanolpermeabilität auf und sind deshalb für Anwendungen in einer Direkt-Methanol-Brennstoffzelle ungeeignet. Trocknet die Membran, z.B. in Folge hoher Temperatur, aus, so nimmt die Leitfähigkeit der Membran und folglich die Leistung der Brennstoffzelle drastisch ab. Die Betriebstemperaturen von Brennstoffzellen enthaltend solche Kationenaustauschermembranen ist somit auf die Siedetemperatur des Wassers beschränkt. Die Befeuchtung der Brennstoffe stellt eine grosse technische Herausforderung für den Einsatz von Polymerelektrolytmembranbrennstoffzellen (PEMBZ) dar, bei denen konventielle, sulfonierte Membranen wie z.B. Nafion verwendet werden.

So verwendet man als Materialien für Polymerelektrolytmembranen beispielsweise Perfluorsulfonsäurepolymere. Das Perfluorsulfonsäurepolymer (wie z.B. Nafion) weist im allgemeinen ein Perfluorkohlenwasserstoffgerüst auf, wie ein Copolymer aus Tetrafluorethylen und Trifluorvinyl, und eine daran gebundene Seitenkette mit einer Sulfonsäuregruppe, wie eine Seitenkette mit einer an eine Perfluoralkylengruppe gebundenen Sulfonsäuregruppe.

Bei den Kationenaustauschermembranen handelt es sich vorzugsweise um organische Polymere mit kovalent gebundenen Säuregruppen, insbesondere Sulfonsäure. Verfahren zur Sulfonierung von Polymeren sind in F. Kucera et. al. Polymer Engineering and Science 1988, Vol. 38, No 5, 783-792 beschrieben.

Im Folgenden sind die wichtigsten Typen von Kationenaustauschmembranen aufgeführt, die zum Einsatz in Brennstoffzellen kommerzielle Bedeutung erlangt haben.

Der wichtigste Vertreter ist das Perfluorosulfonsäurepolymer Nafion® (US-A-3692569) von DuPont. Dieses Polymer kann wie in US-A-4453991 beschrieben in Lösung gebracht und dann als Ionomer eingesetzt werden. Kationenaustauschermembranen werden auch erhalten durch Füllen eines porösen Trägermaterials mit einem solchen Ionomer. Als Trägermaterial wird dabei expandiertes Teflon bevorzugt (US-A-5635041).

Methoden zur Synthese von Membranen ausgehend von ähnlichen perfluorierten Polymeren enthaltend sulfonsäurehaltige Gruppen wurden auch von Dow Chemical, Asahi Glass oder 3M Innovative Properties (US-A-6268532, WO 2001/44314, WO 2001/094427) entwickelt.

Eine weitere perfluorinierte Kationenaustauschermembran kann wie in US-A-5422411 beschrieben durch Copolymerisation aus Trifluorostyrol und sulfonylmodifiziertem Trifuorostyrol hergestellt werden. Kompositmembranen bestehend aus einem porösen Trägermaterial, insbesondere expandiertes Teflon, gefüllt mit Ionomeren bestehend aus solchen sulfonylmodifizierten Trifluorostyrol-Copolymeren sind in US-A-5834523 beschrieben.

US-A-6110616 beschreibt Copolymere aus Butadien und Styrol und deren anschliesende Sulfonierung zur Herstellung von Kationenaustauschermembranen für Brennstoffzellen.

Neben obigen Membranen wurde eine weitere Klasse nichtfluorierter Membranen durch Sulfonierung von hochtemperaturstabilen Thermoplasten entwickelt. So sind Membranen aus sulfonierten Polyetherketonen (DE-A-4219077, WO-96/01177), sulfoniertem Polysulfon (J. Membr. Sci. 83 (1993) p.211) oder sulfoniertem Polyphenylensulfid (DE-A-19527435) bekannt.

Ionomere hergestellt aus sulfonierten Polyetherketonen sind in WO 00/15691 beschrieben.

Desweiteren sind Säure-Base-Blendmembranen bekannt, die wie in DE-A-19817374 oder WO 01/18894 beschrieben, durch Mischungen von sulfonierten Polymeren und basischen Polymeren hergestellt werden.

Zur weiteren Verbesserung der Membraneigenschaften kann eine aus dem Stand der Technik bekannte Kationenaustauschermembran mit einem hochtemperaturstabilen Polymer gemischt werden. Die Herstellung und Eigenschaften von Kationenaustauschermembranen bestehend aus Blends aus sulfonierten Polyetherketonen und a) Polysulfonen (DE-A-4422158), b) aromatischen Polyamiden (DE-A-42445264) oder c) Polybenzimidazol (DE-A-19851498) sind bekannt.

Derartige Membranen können auch durch Verfahren erhalten werden, bei denen Polymere gepfropft werden. Dazu kann wie in EP-A-667983 oder DE-A-19844645 beschrieben an einem zuvor bestrahlten Polymerfilm bestehend aus einem fluorierten oder teilfluoriertem Polymeren eine Pfropfungsreaktion vorzugsweise mit Styrol durchgeführt. Als Pfropfkomponente können alternativ fluorierte aromatische Monomere wie Trifluorstyrol verwendet werden (WO 2001/58576). In einer nachfolgenden Sulfonierungsreaktion erfolgt dann die Sulfonierung der Seitenketten. Als Sulfonierungsmittel werden dabei Chlorsulfonsäure oder Oleum verwendet. In JP 2001/302721 wird ein mit Styrol gepfropfter Film mit 2-ketopentafluorpropansulfonsäure reagiert und so eine Membran mit einer Protonenleitfähigkeit von 0,32 S/cm im befeuchteten Zustand erzielt. Gleichzeitig mit der Pfropfung kann auch eine Vernetzung durchgeführt und somit die mechanischen Eigenschaften und die Brennstoffpermeabilität verändert werden. Als Vernetzer können beispielsweise wie in EP-A-667983 beschrieben Divinylbenzol und/oder Triallylcyanurat oder wie in JP2001/216837 beschrieben 1,4-Butandioldiacrylat verwendet werden.

Die Verfahren zur Herstellung solcher strahlengepfropften und sulfonierten Membranen sind sehr komplex und umfassen zahlreiche Prozessschritte wie i) Herstellungen des Polymerfilmes; ii) Bestrahlung des Polymerfilmes vorzugsweise unter Inertgas und Lagerung bei tiefen Temperaturen (<-60°C); iii) Pfropfungsreaktion unter Stickstoff in einer Lösung aus geeignetem Monomeren und Lösungsmittel; iv) Extraktion des Lösungsmittels; v) Trocknung des gepfropften Filmes; vi) Sulfonierungsreaktion in Anwesenheit aggressiver Reagenzien und chlorierten Kohlenwasserstoffen wie Chlorsulfonsäure in Tetrachlorethan; vii) mehrmaliges Waschen zum Entfernen überschüssiger Lösungsmittel und Sulfonierungsagenzien; viii) Reaktion mit verdünnten Laugen wie Kalilauge zur Umwandlung in Salzform; ix) mehrmaliges Waschen zum Entfernen überschüssiger Lauge; x) Reaktion mit verdünnter Säure wie Salzsäure; xi) abschliessendes Waschen mehrmaliges Waschen zum Entfernen überschüssiger Säure.

Die Dokumente US-A-4 012 303, US-A-5 656 386 beschreiben Strahlen gepfropfte Membranen, die Sulfonsäurehaltige Gruppen umfassen. Eine Leitfähigkeit ohne Befeuchtung wird im Zusammenhang mit diesen Membranen nicht dargelegt.

K.D. Kreuer, Chem. Mater 1996, Vol 8. Seiten 610 - 641 beschreibt die Möglichkeit sulfonsäure - haltige Gruppen durch phosphonsäure- oder carboxylhaltige Gruppen in ersetzen, offenbart aber keine Membranen, die mit vinylphosphonsäure-haltigen Monomeren gepfropft sind.

Nachteil all dieser Kationenaustauschermembranen ist die Tatsache, dass die Membran befeuchtet werden muss, die Betriebstemperatur auf 100°C beschränkt ist, und die Membranen eine hohe Methanolpermeabilität aufweisen. Ursache für diese Nachteile ist der Leitfähigkeitsmechanismus der Membran, wobei der Transport der Protonen an den Transport des Wassermoleküls gekoppelt ist. Dies bezeichnet man als "Vehicle-Mechanismus" (K.-D. Kreuer, Chem. Mater. 1996, 8, 610-641).

Eine Möglichkeit die Betriebstemperatur zu erhöhen besteht darin, das Brennstoffzellensystem unter Druck zu betreiben, um den Siedepunkt des Wassers zu erhöhen. Es hat sich jedoch gezeigt, dass diese Methode eine Vielzahl von Nachteilen mit sich bringt, da das Brennstoffzellensystem komplizierter wird, der Wirkungsgrad abnimmt und anstatt einer gewünschten Gewichtsverringerung eine Gewichtszunahme erfolgt. Weiterhin führt eine Druckerhöhung zu einer höheren mechanischen Beanspruchung der dünnen Polymermembran und kann zu einem Versagen der Membran und somit Systemausfall führen.

Als zweite Kategorie sind Polymerelektrolytmembranen mit Komplexen aus basischen Polymeren und starken Säuren entwickelt worden, die ohne Befeuchtung betrieben werden können. So beschreibt WO96/13872 und die korrespondierende US-A-5525436 ein Verfahren zur Herstellung einer protonenleitenden Polymerelektrolytmembranen, bei dem ein basisches Polymer, wie Polybenzimidazol, mit einer starken Säure, wie Phosphorsäure, Schwefelsäure usw., behandelt wird.

In *J. Electrochem. Soc.,* Band 142, Nr. 7, 1995, S. L121-L123 wird die Dotierung eines Polybenzimidazols in Phosphorsäure beschrieben.

Bei den im Stand der Technik bekannten basischen Polymermembranen wird die - zum Erzielen der erforderlichen Protonenleitfähigkeit - eingesetzte Mineralsäure (meist konzentrierte Phosphorsäure) entweder nach der Formgebung eingesetzt oder alternativ dazu die basische Polymermembran direkt aus Polyphosphorsäure wie in der deutschen Patentanmeldung DE-A-10117686, DE-A-10144815 und DE-A-10117687 hergestellt. Das Polymer dient dabei als Träger für den Elektrolyten bestehend aus der hochkonzentrierten Phosphorsäure, respektive Polyphosphorsäure. Die Polymermembran erfüllt dabei weitere wesentliche Funktionen insbesondere muss sie eine hohe mechanische Stabilität aufweisen und als Separator für die beiden eingangs genannten Brennstoffe dienen.

Eine Möglichkeit zur Herstellung einer strahlengepfropften Membran zum Betrieb bei Temperaturen oberhalb

100°C wird in JP 2001-213987 (Toyota) beschrieben. Hierzu wird ein teilfluorierter Polymerfilm aus Polyethylen-tetrafluorethylen oder Polyvinyldifluorid bestrahlt und anschliessend mit einem basischen Monomer wie Vinylpyridin reagiert. Durch den Einbau von gepfropften Seitenketten aus Polyvinylpyridin zeigen diese strahlengepfropften Materialien eine hohe Quellung mit Phosphorsäure. Durch Dotierung mit Phosphorsäure werden so protonenleitende Membranen mit einer Leitfähigkeit von 0,1 S/cm bei 180°C ohne Befeuchtung hergestellt.

JP2000/331693 beschreibt die Herstellung einer anionenaustauschenden Membran durch Strahlenpfropfung. Dabei wird die Pfropfungsreaktion mit Vinylbenzyltrimethylammoniumsalz oder quaternären Salzen von Vinylpyridin oder Vinylimidazol durchgeführt. Solche anionenaustauschenden Membranen sind jedoch nicht für den Einsatz in Brennstoffzellen geeignet.

Wesentliche Vorteile einer solchen Phosphorsäure oder Polyphosphorsäure dotierten Membran ist die Tatsache, dass eine Brennstoffzelle, bei der eine derartige Polymerelektrolytmembran eingesetzt wird, bei Temperaturen oberhalb 100°C ohne eine sonst notwendige Befeuchtung der Brennstoffe betrieben werden kann. Dies liegt in der Eigenschaft der Phosphorsäure begründet die Protonen ohne zusätzliches Wasser mittels des sog. Grotthus Mechanismus transportieren zu können (K.-D. Kreuer, Chem. Mater. 1996, 8, 610-641).

Durch die Möglichkeit des Betriebes bei Temperaturen oberhalb 100°C ergeben sich weitere Vorteile für das Brennstoffzellensystem. Zum Einen wird die Empfindlichkeit des Pt-Katalysators gegenüber Gasverunreinigungen, insbesondere CO, stark verringert. CO entsteht als Nebenprodukt bei der Reformierung des wasserstoffreichen Gases aus Kohlenstoffhaltigen Verbindungen, wie z.B. Erdgas, Methanol oder Benzin oder auch als Zwischenprodukt bei der direkten Oxidation von Methanol. Typischerweise muss der CO-Gehalt des Brennstoffes bei Temperaturen <100°C kleiner als 100 ppm sein. Bei Temperaturen im Bereich 150-200° können jedoch auch 10000 ppm CO oder mehr toleriert werden (N. J. Bjerrum et. al. Journal of Applied Electrochemistry, 2001,31, 773-779). Dies führt zu wesentlichen Vereinfachungen des vorgeschalteten Reformierungsprozesses und somit zu Kostensenkungen des gesamten Brennstoffzellensystems.

Ein grosser Vorteil von Brennstoffzellen ist die Tatsache, dass bei der elektrochemischen Reaktion die Energie des Brennstoffes direkt in elektrische Energie und Wärme umgewandelt wird. Als Reaktionsprodukt entsteht dabei an der Kathode Wasser. Als Nebenprodukt bei der elektrochemischen Reaktion entsteht also Wärme. Für Anwendungen bei denen nur der Strom zum Antrieb von Elektromotoren genutzt wird, wie z.B. für Automobilanwendungen, oder als vielfältiger Ersatz von Batteriesystemen muss die Wärme abgeführt werden, um ein Überhitzen des Systems zu vermeiden. Für die Kühlung werden dann zusätzliche, Energie verbrauchende Geräte notwendig, die den elektrischen Gesamt-Wirkungsgrad der Brennstoffzelle weiter verringern. Für stationäre Anwendungen wie zur zentralen oder dezentralen Erzeugung von Strom und Wärme lässt sich die Wärme effizient durch vorhandene Technologien wie z.B. Wärmetauscher nutzen. Zur Steigerung der Effizienz werden dabei hohe Temperaturen angestrebt. Liegt die Betriebstemperatur oberhalb 100°C und ist die Temperaturdifferenz zwischen der Umgebungstemperatur und der Betriebstemperatur groß, so wird es möglich das Brennstoffzellensystem effizienter zu kühlen beziehungsweise kleine Kühlflächen zu verwenden und auf zusätzliche Geräte zu verzichten im Vergleich zu Brennstoffzellen, die aufgrund der Membranbefeuchtung bei unter 100°C betrieben werden müssen.

Neben diesen Vorteilen weist ein solches Brennstoffzellensystem einen entscheidenden Nachteil auf. So liegt Phosphorsäure oder Polyphosphorsäure als Elektrolyt vor, die durch ionische Wechselwirkungen nicht permanent an das basische Polymer gebunden ist und durch Wasser ausgewaschen werden kann. Wasser wird wie oben beschrieben bei der elektrochemischen Reaktion an der Kathode gebildet. Liegt die Betriebstemperatur oberhalb 100°C so wird das Wasser zum Grossteil als Dampf durch die Gasdiffusionselektrode abgeführt und der Säureverlust ist sehr gering. Fällt die Betriebstemperatur jedoch unter 100°C, z.B. beim An- und Abfahren der Zelle oder in Teillastbetrieb wenn eine hohe Stromausbeute angestrebt wird, so kondensiert das gebildete Wasser und kann zu einem verstärkten Auswaschen des Elektrolyten, hochkonzentrierte Phosphorsäure oder Polyphosphorsäure, führen. Dies kann bei der vorstehend beschriebenen Fahrweise der Brennstoffzelle zu einem stetigen Verlust der Leitfähigkeit und Zellleistung führen, welche die Lebensdauer der Brennstoffzelle vermindern kann.

Weiterhin können die bekannten mit Phosphorsäure dotierten Membranen nicht in der sogenannten Direkt-Methanol-Brennstoffzelle (DMBZ) eingesetzt werden. Derartige Zellen sind jedoch von besonderem Interesse, da ein Methanol-Wasser-Gemisch als Brennstoff eingesetzt wird. Wird eine bekannte Membran auf Basis von Phosphorsäure verwendet, so versagt die Brennstoffzelle nach einer recht kurzen Zeit.

Der vorliegenden Erfindung liegt daher die Aufgabe zugrunde, eine neuartige Polymerelektrolytmembran bereitzustellen, bei der ein Auswaschen des Elektrolyten verhindert wird. Insbesondere soll so die Betriebstemperatur von <0°C bis auf 200°C ausgeweitet werden können. Eine Brennstoffzelle enthaltend eine erfindungsgemässe Polymerelektrolytmembran soll sich eignen für reinen Wasserstoff sowie für zahlreiche kohlenstoffhaltige Brennstoffe insbesondere Erdgas, Benzin, Methanol und Biomasse.

Des weiteren soll eine erfindungsgemäße Membran kostengünstig und einfach hergestellt werden können. Darüber hinaus war es mithin Aufgabe der vorliegenden Erfindung Polymerelektrolytmembranen zu schaffen, die eine hohe Leistungsfähigkeit, insbesondere eine hohe Leitfähigkeit zeigen.

Des weiteren sollte eine Polymerelektrolytmembran geschaffen werden, die eine hohe mechanische Stabilität, beispielsweise einen hohen E-Modul, eine hohe Reißfestigkeit, ein geringes Kriechen und eine hohe Bruchzähigkeit aufweist.

Darüber hinaus war es mithin Aufgabe der vorliegenden Erfindung eine Membran zur Verfügung zu stellen, die auch im Betrieb eine geringe Durchlässigkeit gegen die verschiedensten Brennstoffe, wie beispielsweise Wasserstoff oder Methanol aufweist, wobei diese Membran auch eine geringe Sauerstoffpermeabilität zeigen sollte.

Eine weitere Aufgabe der vorliegenden Erfindung besteht in einer Vereinfachung und Reduktion der Prozessschritte bei der Herstellung einer erfindungsgemässen Membran mittels Strahlenpfropfen, so dass diese auch in technischem Massstab durchführbar sind.

Gelöst wird diese Aufgabe durch die Modifizierung einer Folie auf Basis von technischen Polymeren mittels Strahlung und anschliessender Behandlung mit Vinylphosphonsäurehaltigen oder vinylphosphonsaüre- und Vinylsulfonsäurehaltigen Monomeren und deren nachfolgenden Polymerisation, die zu einer gepfropften Polymerlektrolytmembran führen, wobei das Polyvinylphosphonsäure-/Polyvinylsulfonsäurepolymer kovalent an das Polymerrückgrat gebunden ist.

Bedingt durch die Konzentration an Polyvinylphosphonsäure-/Polyvinyisulfonsäurepolymer, seine hohe Kettenflexibilität und die hohe Säurestärke der Polyvinylphosphonsäure beruht die Leitfähigkeit auf dem Grotthus-Mechanismus und das System benötigt somit keine zusätzliche Befeuchtung bei Temperaturen oberhalb dem Siedepunkt des Wassers. Umgekehrt ist bei Temperaturen unterhalb des Siedepunktes des Wassers durch die Anwesenheit der Polyvinylsulfonsäure bei entsprechender Befeuchtung eine ausreichende Leitfähigkeit des Systems zu beobachten.

Die polymere Polyvinylphosphon-/Polyvinylsulfonsäure, die durch reaktive Gruppen auch vernetzt werden kann, ist in Folge der Pfropfungsreaktion kovalent an die Polymerkette gebunden und wird durch gebildetes Produktwasser oder im Falle einer DMBZ durch den wässrigen Brennstoff nicht ausgewaschen. Eine erfindungsgemässe Polymerelektrolytmembran besitzt eine sehr geringe Methanolpermeabilität und eignet sich insbesondere für den Einsatz in einer DMBZ.

Somit ist ein dauerhafter Betrieb einer Brennstoffzelle mit einer Vielzahl von Brennstoffen wie Wasserstoff, Erdgas, Benzin, Methanol oder Biomasse möglich. Hierbei ermöglichen die Membranen eine besonders hohe Aktivität dieser Brennstoffe. Bedingt durch die hohen Temperaturen kann die Methanoloxidation hierbei mit hoher Aktivität erfolgen. In einer besonderen Ausführungsform eignen sich diese Membranen für den Betrieb in einer sogenannten dampfförmigen DMBZ, insbesondere bei Temperaturen im Bereich von 100 bis 200°C.

Durch die Möglichkeit des Betriebes bei Temperaturen oberhalb 100°C nimmt Empfindlichkeit des Pt-Katalysators gegenüber Gasverunreinigungen, insbesondere CO, stark ab. CO entsteht als Nebenprodukt bei der Reformierung des wasserstoffreichen Gases aus Kohlenstoffhaltigen Verbindungen, wie z.B. Erdgas, Methanol oder Benzin oder auch als Zwischenprodukt bei der direkten Oxidation von Methanol. Typischerweise kann der CO-Gehalt des Brennstoffes bei Temperaturen oberhalb 120°C größer als 5000 ppm sein, ohne dass die katalytische Wirkung des Pt-Katalysators drastisch reduziert wird. Bei Temperaturen im Bereich 150-200° können jedoch auch 10000 ppm CO oder mehr toleriert werden (N. J. Bjerrum et. al. Journal of Applied Electrochemistry, 2001,31, 773-779). Dies führt zu wesentlichen Vereinfachungen des vorgeschalteten Reformierungsprozesses und somit zu Kostensenkungen des gesamten Brennstoffzellensystems.

Eine erfindungsgemäße Membran zeigt über einen großen Temperaturbereich eine hohe Leitfähigkeit, die auch ohne eine zusätzliche Befeuchtung erzielt wird. Des weiteren kann eine Brennstoffzelle, die mit einer erfindungsgemäßen Membran ausgestattet ist, auch bei tiefen Temperaturen, beispielsweise bei 80°C oder weniger betrieben werden, ohne dass hierdurch die Lebensdauer der Brennstoffzelle sehr stark herabgesetzt wird.

Gegenstand der vorliegenden Erfindung ist daher eine protonenleitende Polymerelektrolytmembran erhältlich durch ein Verfahren umfassend die Schritte

A. Bestrahlen eines flächigen Gebildes umfassend mindestens ein Polymer mit Strahlung unter Erzeugung von Radikalen,
B. Aufbringen einer Flüssigkeit enthaltend Vinylphosphonsäurehaltige Monomere oder vinylphosphonsäure- und Vinylsulfonsäurehaltige Monomere auf mindestens eine Fläche der Folie,
C. Polymerisation der in Schritt B) eingebrachten Vinylphosphonsäurehaltigen und/oder Vinylsulfonsäurehaltigen Monomeren.

Bei den in Schritt A) eingesetzten flächigen Gebildes handelt es sich um eine Folie oder eine Schicht umfassend mindestens ein Polymer.

Gemäß einem besonderen Aspekt der vorliegenden Erfindung handelt bei der in Schritt A) eingesetzten Polymerfolie es sich um eine Folie, die eine Quellung von mindestens 3 % in der Vinylphosphonsäurehaltigen Flüssigkeit aufweist. Als Quellung wird eine Gewichtszunahme der Folie von mindestens 3 Gew.-% verstanden. Bevorzugt beträgt die Quellung mindestens 5 %, besonders bevorzugt mindestens 10%.

Bestimmung der Quellung Q wird gravimetrisch bestimmt aus der Masse des Filmes vor der Quellung $m_o$ und der Masse des Filmes nach der Polymerisation gemäß Schritt B), $m_2$.

$$Q = (m_2 - m_0)/m_0 \times 100$$

Die Quellung erfolgt vorzugsweise bei einer Temperatur oberhalb 0°C, insbesondere zwischen Raumtemperatur (20°C) und 180°C in einer vinylphosphonsäurehaltigen Flüssigkeit die mindestens 5 Gew.-% Vinylphosphonsäure oder Vinylphosphonsäure und Vinylsulfonsäure enthält. Des weiteren kann die Quellung auch bei erhöhtem Druck durchgeführt werden. Hierbei ergeben sich die Grenzen aus wirtschaftlichen Überlegungen und technischen Möglichkeiten.

Die zur Quellung eingesetzte Polymerfolie weist im allgemeinen eine Dicke im Bereich von 5 bis 1000 µm, vorzugsweise 10 bis 500 µm und besonders bevorzugt 15 bis 250 µm auf. Die Herstellung derartiger Folien aus Polymeren ist im allgemeinen bekannt, wobei diese teilweise kommerziell erhältlich sind. Der Begriff Polymerfolie bedeutet, dass die zum Quellen einzusetzende Folie Polymere umfasst, wobei diese Folie weitere allgemein übliche Additive enthalten kann.

Zu den bevorzugten Polymeren gehören unter anderem Polyolefine, wie Poly(chloropren), Polyacetylen, Polyphenylen, Poly(p-xylylen), Polyarylmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin, Polyvinylchlorid, Polyvinylidenchlorid, Polytetrafluorethylen, Polyvinyldifluorid, Polyhexafluorpropylen, Polyethylen-tetrafluorethylen, Copolymere von PTFE mit Hexafluoropropylen, mit Perfluorpropylvinylether, mit Trifluoronitrosomethan, mit Carbalkoxyperfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, Cycloolefinische Copolymere, insbesondere aus Norbornen; Polymere mit C-O-Bindungen in der Hauptkette, beispielsweise Polyacetal, Polyoxymethylen, Polyether, Polypropylenoxid, Polyepichlorhydrin, Polytetrahydrofuran, Polyphenylenoxid, Polyetherketon, Polyetheretherketon, Polyetherketonketon, Polyetheretherketonketon, Polyetherketonetherketonketon, Polyester, insbesondere Polyhydroxyessigsäure, Polyethylenterephthalat, Polybutylenterephthalat, Polyhydroxybenzoat, Polyhydroxypropionsäure, Polypropionsäure, Polypivalolacton, Polycaprolacton, Furan-Harze, Phenol-Aryl-Harze, Polymalonsäure, Polycarbonat;

Polymere C-S-Bindungen in der Hauptkette, beispielsweise Polysulfidether, Polyphenylensulfid, Polyethersulfon, Polysulfon, Polyetherethersulfon, Polyarlyethersulfon, Polyphenylensulfon, Polyphenylensulfidsulfon, Poly(phenylsulfid-1,4-phenylen;

Polymere C-N-Bindungen in der Hauptkette, beispielsweise Polyimine, Polyisocyanide, Polyetherimin, Polyetherimide, Poly(trifluoro-methyl-bis(phthalimid)-phenyl, Polyanilin, Polyaramide, Polyamide, Polyhydrazide, Polyurethane, Polyimide, Polyazole, Polyazoletherketon, Polyharnstoffe, Polyazine; Flüssigkristalline Polymere, insbesondere Vectra sowie Anorganische Polymere, beispielsweise Polysilane, Polycarbosilane, Polysiloxane, Polykieselsäure, Polysilikate, Silicone, Polyphosphazene und Polythiazyl.

Gemäß einem besonderen Aspekt der vorliegenden Erfindung werden vorzugsweise Polymere eingesetzt, die mindestens ein Fluor-, Stickstoff-, Sauerstoff- und/oder Schwefelatom in einer oder in unterschiedlichen Wiederholungseinheit enthalten.

Gemäß einer besonderen Ausführungsform werden bevorzugt hochtemperaturstabile Polymere eingesetzt. Hochtemperaturstabil im Sinne der vorliegenden Erfindung ist ein Polymer, welches als Polymerer Elektrolyt in einer Brennstoffzelle bei Temperaturen oberhalb 120°C dauerhaft betrieben werden kann. Dauerhaft bedeutet, dass eine erfindungsgemäße Membran mindestens 100 Stunden, vorzugsweise mindestens 500 Stunden bei mindestens 120°C, vorzugsweise mindestens 160°C betrieben werden kann, ohne dass die Leistung, die gemäß der in WO 01/18894 A2 beschriebenen Methode gemessen werden kann, um mehr als 50%, bezogen auf die Anfangsleistung abnimmt.

Bei den in Schritt A) eingesetzten Polymeren handelt es sich vorzugsweise um Polymere, die eine Glasübergangstemperatur oder Vicat-Erweichungstemperatur VST/A/50 von mindestens 100°C, bevorzugt mindestens 150°C und ganz besonders bevorzugt mindestens 180°C haben.

Besonders bevorzugt sind Polymere, die mindestens ein Stickstoffatom in einer Wiederholungseinheit enthalten. Insbesondere bevorzugt sind Polymere, die mindestens einen aromatischen Ring mit mindestens einem Stickstoffheteroatom pro Wiederholungseinheit enthalten. Innerhalb dieser Gruppe sind insbesondere Polymere auf Basis von Polyazolen bevorzugt. Diese basischen Polyazol-Polymere enthalten mindestens einen aromatischen Ring mit mindestens einem Stickstoffheteroatom pro Wiederholungseinheit.

Bei dem aromatischen Ring handelt es sich vorzugsweise um einen fünf- oder sechsgliedrigen Ring mit eins bis drei Stickstoffatomen, der mit einem anderen Ring, insbesondere einem anderen aromatischen Ring, anelliert sein kann.

Polymere auf Basis von Polyazol enthalten wiederkehrende Azoleinheiten der allgemeinen Formel (I) und/oder

(II) und/oder (III) und/oder (IV) und/oder (V) und/oder (VI) und/oder (VII) und/oder (VIII) und/oder (IX) und/oder (X) un d/oder (XI) und/oder (XII) und/oder (XIII) und/oder (XIV) und/oder (XV) und/oder (XVI) und/oder (XVI) und/oder (XVII) und/oder (XVIII) und/oder (XIX) und/oder (XX) und/oder (XXI) und/oder (XXII)

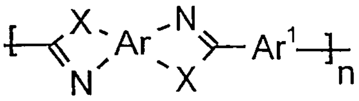

(I)

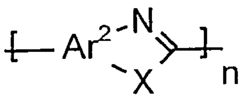

(II)

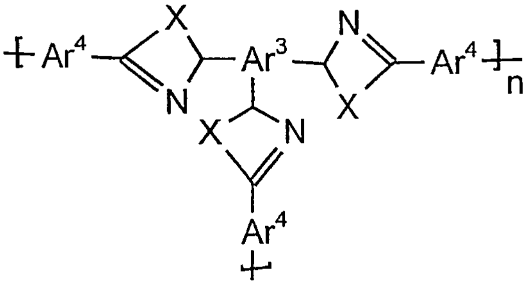

(III)

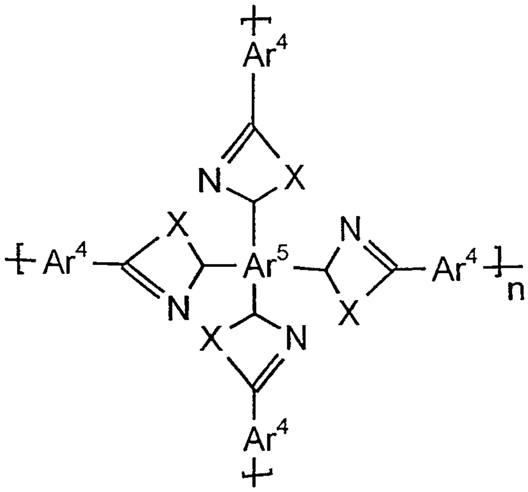

(IV)

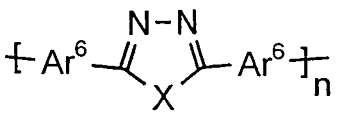
(V)

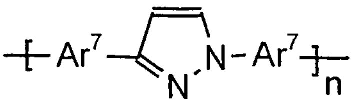
(VI)

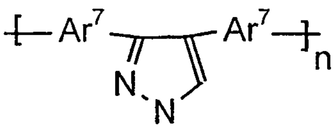
(VII)

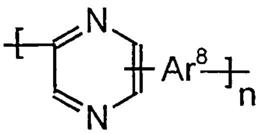
(VIII)

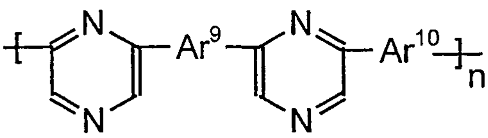
(IX)

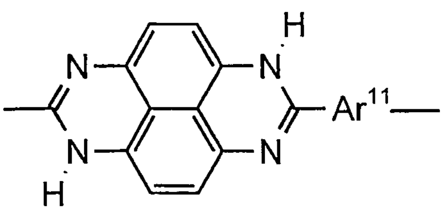
(X)

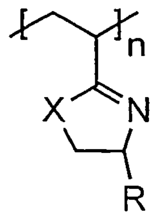

(XI)

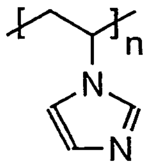

(XII)

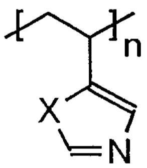

(XIII)

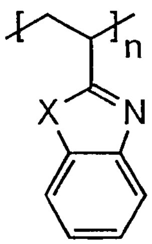

(XIV)

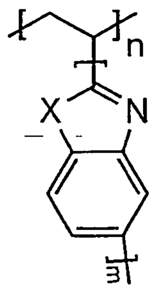

(XV)

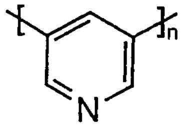

(XVI)

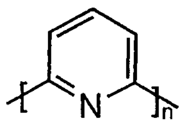

(XVII)

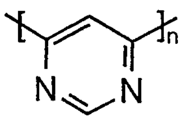

(XVIII)

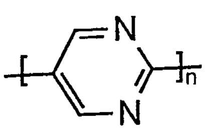

(XIX)

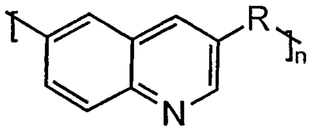

(XX)

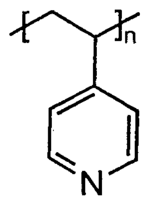

(XXI)

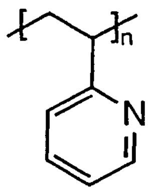

(XXII)

worin

- Ar gleich oder verschieden sind und für eine vierbindige aromatische oder heteroaromatische Gruppe, die ein- oder mehrkernig sein kann,
- $Ar^1$ gleich oder verschieden sind und für eine zweibindige aromatische oder heteroaromatische Gruppe, die ein- oder mehrkernig sein kann,
- $Ar^2$ gleich oder verschieden sind und für eine zwei oder dreibindige aromatische oder heteroaromatische Gruppe, die ein- oder mehrkernig sein kann,
- $Ar^3$ gleich oder verschieden sind und für eine dreibindige aromatische oder heteroaromatische Gruppe, die ein- oder mehrkernig sein kann,
- $Ar^4$ gleich oder verschieden sind und für eine dreibindige aromatische oder heteroaromatische Gruppe, die ein- oder mehrkernig sein kann,
- $Ar^5$ gleich oder verschieden sind und für eine vierbindige aromatische oder heteroaromatische Gruppe, die ein- oder mehrkernig sein kann,
- $Ar^6$ gleich oder verschieden sind und für eine zweibindige aromatische oder heteroaromatische Gruppe, die ein- oder mehrkernig sein kann,
- $Ar^7$ gleich oder verschieden sind und für eine zweibindige aromatische oder heteroaromatische Gruppe, die ein- oder mehrkernig sein kann,
- $Ar^8$ gleich oder verschieden sind und für eine dreibindige aromatische oder heteroaromatische Gruppe, die ein- oder mehrkernig sein kann,
- $Ar^9$ gleich oder verschieden sind und für eine zwei- oder drei- oder vierbindige aromatische oder heteroaromatische Gruppe, die ein- oder mehrkernig sein kann,
- $Ar^{10}$ gleich oder verschieden sind und für eine zwei- oder dreibindige aromatische oder heteroaromatische Gruppe, die ein- oder mehrkernig sein kann,
- $Ar^{11}$ gleich oder verschieden sind und für eine zweibindige aromatische oder heteroaromatische Gruppe, die ein- oder mehrkernig sein kann,
- X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R gleich oder verschieden für Wasserstoff, eine Alkylgruppe und eine aromatische Gruppe steht und

n, m eine ganze Zahl größer gleich 10, bevorzugt größer gleich 100 ist.

Erfindungsgemäß bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können.

Dabei ist das Substitionsmuster von $Ar^1$, $Ar^4$, $Ar^6$, $Ar^7$, $Ar^8$, $Ar^9$, $Ar^{10}$, $Ar^{11}$ beliebig, im Falle vom Phenylen beispielsweise kann $Ar^1$, $Ar^4$, $Ar^6$, $Ar^7$, $Ar^8$, $Ar^9$, $Ar^{10}$, $Ar^{11}$ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben:

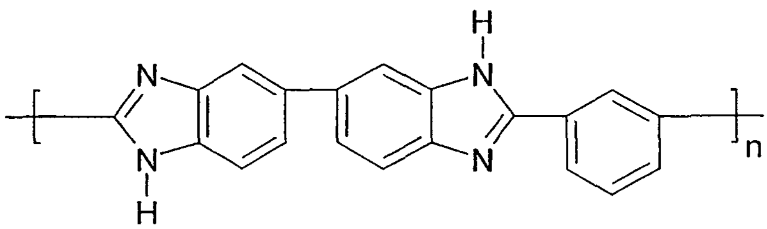

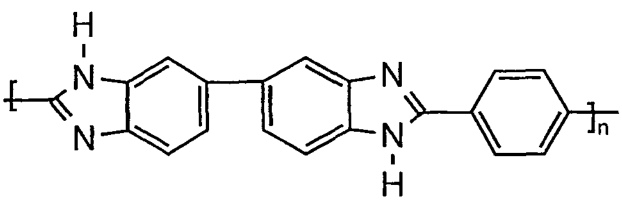

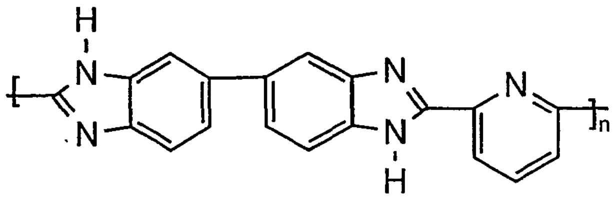

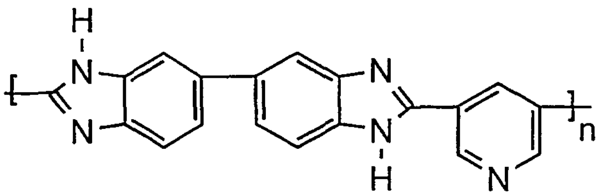

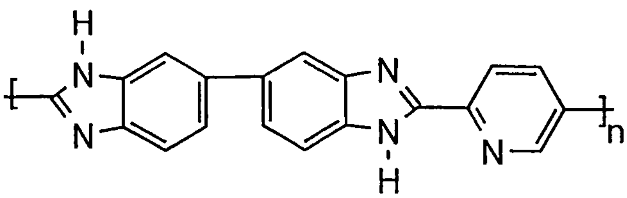

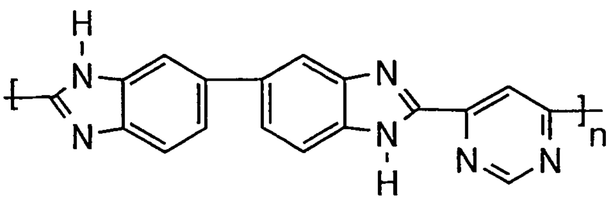

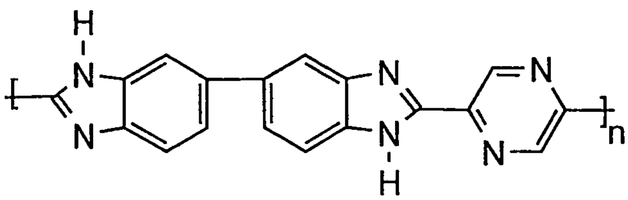

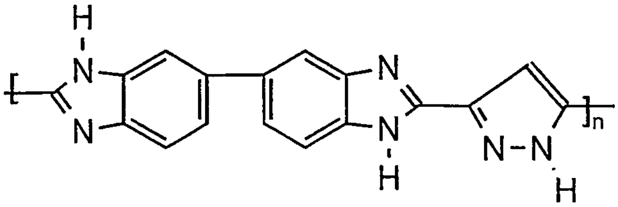

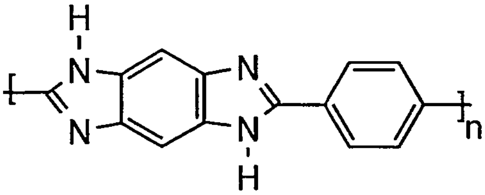

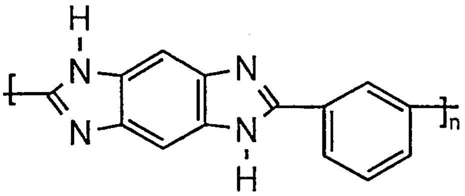

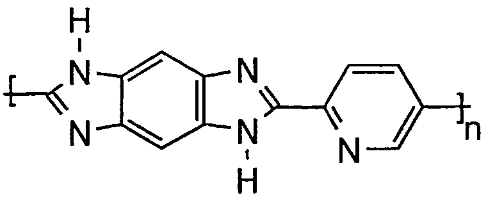

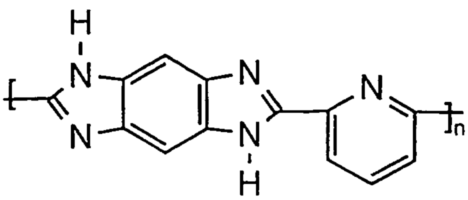

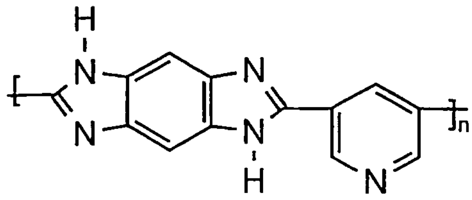

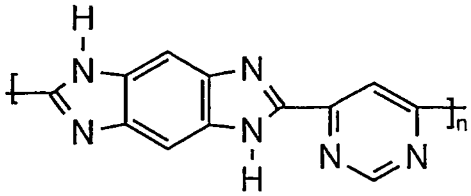

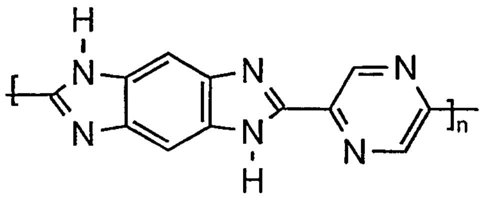

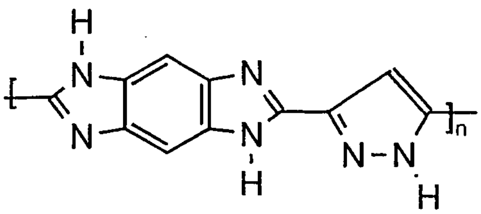

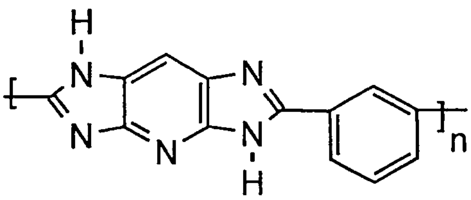

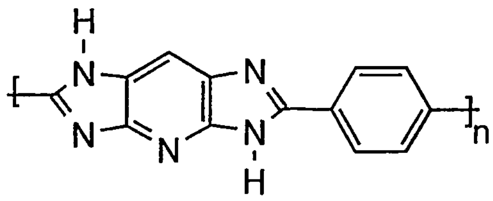

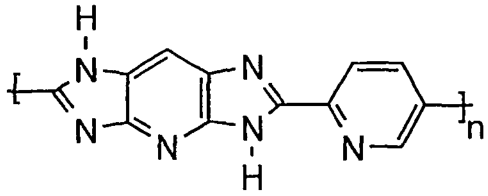

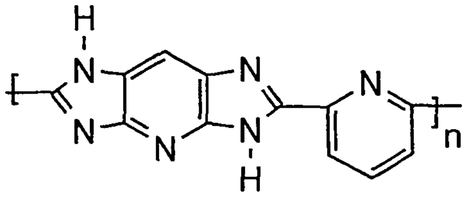

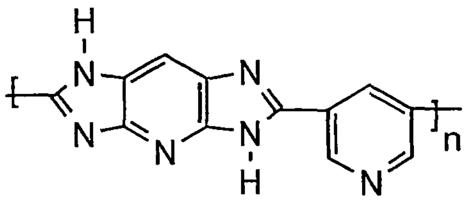

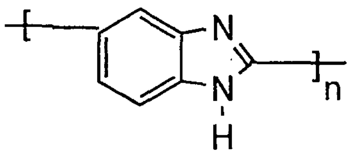

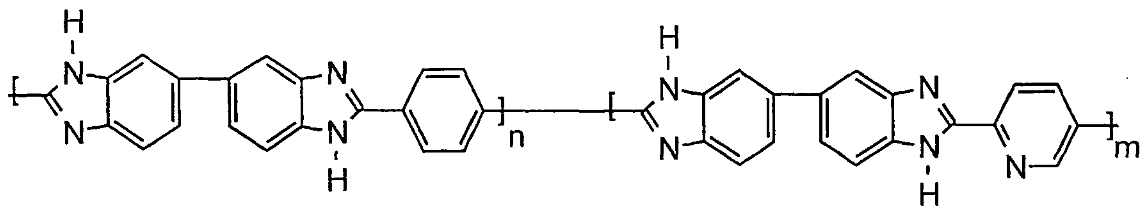

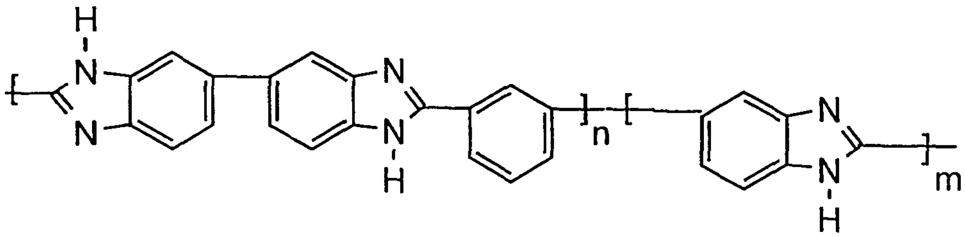

wobei n und m eine ganze Zahl größer gleich 10, vorzugsweise größer gleich 100 ist.

Weitere bevorzugte Polyazol-Polymere sind Polyimidazole, Polybenzimidazoletherketon, Polybenzthiazole, Polybenzoxazole, Polytriazole, Polyoxadiazoie, Polythiadiazole, Polypyrazole, Polyquinoxalines, Poly(pyridine), Poly (pyrimidine), und Poly(tetrazapyrene).

Besonders bevorzugt ist Celazole der Fa. Celanese, insbesondere ein solches bei dem das in der deutschen Patentanmeldung DE-A-10129458 beschriebene durch Sieben aufgearbeitete Polymer eingesetzt wird.

Neben den vorstehend genannten Polymeren kann auch ein Blend das weitere Polymere enthält eingesetzt werden. Die Blendkomponente hat dabei im Wesentlichen die Aufgabe die mechanischen Eigenschaften zu verbessern und die Materialkosten zu verringern. Eine bevorzugte Blendkomponente ist dabei Polyethersulfon wie in der deutschen Patentanmeldung DE-A-10052242 beschrieben.

Zusätzlich kann der Polymerfilm weitere Modifizierungen, beispielsweise durch Vernetzung wie in der deutschen Patentanmeldung DE-A-10110752 oder in WO 00/44816 aufweisen. In einer bevorzugten Ausführungsform enthält die eingesetzte Polymerfolie aus einem basischen Polymer und mindestens einer Blendkomponente zusätzlich einem Vernetzer wie in der deutschen Patentanmeldung DE-A-10140147 beschrieben.

Zusätzlich ist es von Vorteil, wenn die eingesetzte Polymerfolie zuvor wie in der deutschen Patentanmeldung DE-A-10109829 beschrieben behandelt wird. Diese Variante ist vorteilhaft, um die Pfropfung der Polymerfolie zu erhöhen.

Anstelle der mittels klassischer Verfahren hergestellten Polymerfolien können auch die polyazolhaltigen Polymermembranen, wie in den deutschen Patentanmeldungen DE-A-10117686, DE-A-10144815, DE-A-10117687 beschrieben, eingesetzt werden. Hierzu werden diese von der Polyphoshorsäure und/oder Phosphorsäure befreit und in Schritt A) eingesetzt.

Die eingesetzten Polyazole, inbesondere jedoch die Polybenzimidazole zeichnen sich durch ein hohes Molekulargewicht aus. Gemessen als Intrinsische Viskosität beträgt diese mindestens 0,2 dl/g, vorzugsweise 0,8 bis 10 dl/g, insbesondere 1 bis 10 dl/g.

Zu den bevorzugten Polymeren gehören Polysulfone, insbesondere Polysulfon mit aromatischen und/oder heteroaromatischen Gruppen in der Hauptkette. Gemäß einem besonderen Aspekt der vorliegenden Erfindung weisen bevorzugte Polysulfone und Polyethersulfone eine Schmelzvolumenrate MVR 300/21,6 kleiner oder gleich 40 $cm^3$/ 10 min, insbesondere kleiner oder gleich 30 $cm^3$/10 min und besonders bevorzugt kleiner oder gleich 20 $cm^3$/ 10 min gemessen nach ISO 1133 auf. Hierbei sind Polysulfone mit einer Vicat-Erweichungstemperatur VST/A/50 von 180°C bis 230°C bevorzugt. In noch einer bevorzugten Ausführungsform der vorliegenden Erfindung ist das Zahlenmittel des Molekulargewichts von den Polysulfonen größer als 30.000 g/mol.

Zu den Polymeren auf Basis von Polysulfon gehören insbesondere Polymere, welche wiederkehrende Einheiten mit verknüpfenden Sulfon-Gruppen entsprechend den allgemeinen Formeln A, B, C, D, E, F und/oder G aufweisen:

$$-O-R-SO_2-R- \quad (A)$$

$$-O-R-SO_2-R-O-R- \quad (B)$$

$-O-R-SO_2-R-O-R-R-$ (C)

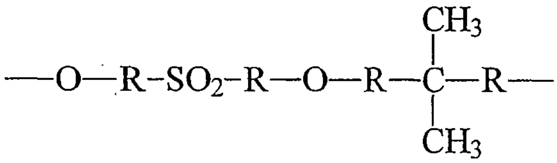

(D)

$-O-R-SO_2-R-R-SO_2-R-$ (E)

$-O-R-SO_2-R-R-SO_2R-O-R-SO_2-]$ (F)

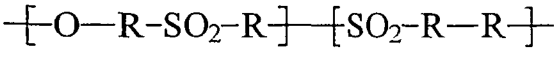

(G),

worin die Reste R unabhängig voneinander gleich oder verschieden eine aromatische oder heteroaromatische Gruppen darstellen, wobei diese Reste zuvor näher erläutert wurden. Hierzu gehören insbesondere 1,2-Phenylen, 1,3-Phenylen, 1,4-Phenylen, 4,4'-Biphenyl, Pyridin, Chinolin, Naphthalin, Phenanthren.

Zu den im Rahmen der vorliegenden Erfindung bevorzugten Polysulfone gehören Homo- und Copolymere, beispielsweise statistische Copolymere. Besonders bevorzugte Polysulfone umfassen wiederkehrende Einheiten der Formeln H bis N:

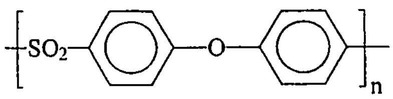

(H)

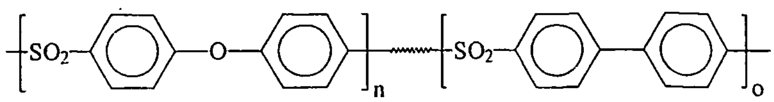

(I)

mitn>o

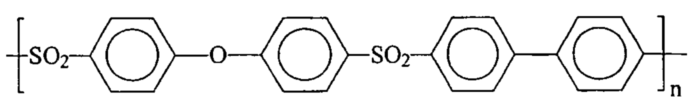

(J)

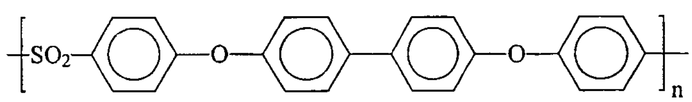

(K)

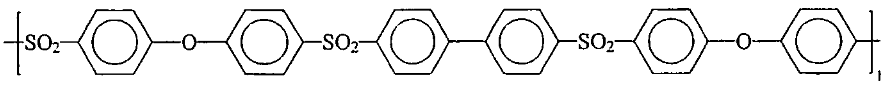

(L)

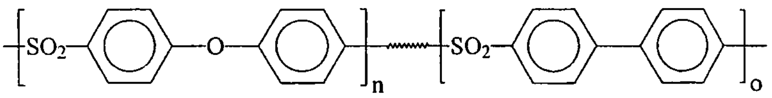

(M)

mit n < o

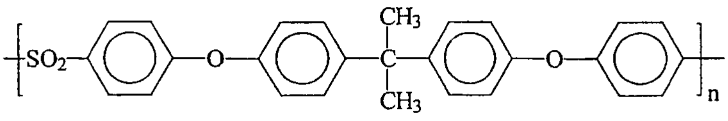

(N)

Die zuvor beschriebenen Polysulfone können unter den Handelsnamen ®Victrex 200 P, ®Victrex 720 P, ®Ultrason E, ®Ultrason S, ®Mindel, ®Radel A, ®Radel R, ®Victrex HTA, ®Astrel und ®Udel kommerziell erhalten werden.

Darüber hinaus sind Polyetherketone, Polyetherketonketone, Polyetheretherketone, Polyetheretherketonketone und Polyarylketone besonders bevorzugt. Diese Hochleistungspolymere sind an sich bekannt und können unter den Handelsnamen Victrex® PEEK™, ®Hostatec, ®Kadel kommerziell erhalten werden.

Die vorstehend genannten Polymeren können einzeln oder als Mischung (Blend) eingesetzt werden. Hierbei sind insbesondere Blends bevorzugt, die Polyazole und/oder Polysulfone enthalten. Durch die Verwendung von Blends können die mechanischen Eigenschaften verbessert und die Materialkosten verringert werden.

Zur Erzeugung der Radikale wird die Folie in Schritt A) ein oder mehrmals mit einer oder verschiedenen Strahlungen behandelt bis eine ausreichende Konzentration an Radikalen erhalten wird. Als Strahlungen werden beispielsweise elektromagnetische Strahlung, insbesondere $\gamma$-Strahlung und/oder Elektronenstrahlen, beispielsweise $\beta$-Strahlung eingesetzt. Eine ausreichend hohe Konzentration an Radikalen wird durch eine Strahlungsdosis von 1 bis 500 kGy, bevorzugt von 3 bis 300 kGy und ganz besonders bevorzugt von 5 bis 200 kGy erreicht. Besonders bevorzugt erfolgt die Bestrahlung mit Elektronen im vorstehend angegebenen Bereich. Die Bestrahlung kann an Luft oder Inertgas erfolgen.

Nach der Bestrahlung können die Proben bei Temperaturen unterhalb -50°C über Wochen gelagert werden, ohne dass die Radikalaktivität nennenswert verloren geht.

Vinylhaltige Phosphonsäuren sind in der Fachwelt bekannt. Es handelt sich hierbei um Verbindungen, die mindestens eine Kohlenstoff-Kohlenstoff-Doppelbindung und mindestens eine Phosphonsäuregruppe aufweisen. Vorzugsweise weisen die zwei Kohlenstoffatome, die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich die Polyvinylphosphonsäure aus dem Polymerisationsprodukt, das durch Polymerisation der Vinylhaltigen Phosphonsäure allein oder mit weiteren Monomeren und/oder Vernetzern erhalten wird.

Die Vinylhaltige Phosphonsäure kann ein, zwei, drei oder mehr Kohlenstoff-Kohlenstoff-Doppelbindungen umfassen. Des weiteren kann die Vinylhaltige Phosphonsäure ein, zwei, drei oder mehr Phosphonsäuregruppen enthalten.

Im allgemeinen enthält die Vinylhaltige Phosphonsäure 2 bis 20, vorzugsweise 2 bis 10 Kohlenstoffatome.

Bei der in Schritt B) verwendeten vinylhaltigen Phosphonsäure handelt es sich vorzugsweise um Verbindungen der Formel

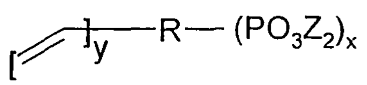

worin

- R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
- Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x eine ganze Zahl 1, 2, 3, 4, 5, 6, 7, 8, 9 oder 10 bedeutet
- y eine ganze Zahl 1, 2, 3, 4, 5, 6, 7, 8, 9 oder 10 bedeutet

und/oder der Formel

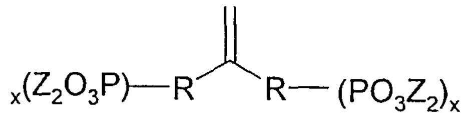

worin

- R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
- Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x eine ganze Zahl 1, 2, 3, 4, 5, 6, 7, 8, 9 oder 10 bedeutet

und/oder der Formel

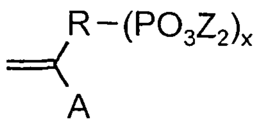

worin

- A eine Gruppe der Formeln $COOR^2$, CN, $CONR^2_2$, $OR^2$ und/oder $R^2$ darstellt,
  worin $R^2$ Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können
- R eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
- Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x eine ganze Zahl 1, 2, 3, 4, 5, 6, 7, 8, 9 oder 10 bedeutet.

Zu den bevorzugten Vinylhaltigen Phosphonsäuren gehören unter anderem Alkene, die Phosphonsäuregruppen aufweisen, wie Ethenphosphonsäure, Propenphosphonsäure, Butenphosphonsäure; Acrylsäure- und/oder Methacrylsäure-Verbindungen, die Phosphonsäuregruppen aufweisen, wie beispielsweise 2-Phosphonomethyl-acrylsäure, 2-Phosphonomethyl-methacrylsäure, 2-Phosphonomethyl-acrylsäureamid und 2-Phosphonomethyl-methacrylsäureamid.

Besonders bevorzugt wird handelsübliche Vinylphosphonsäure (Ethenphosphonsäure), wie diese beispielsweise von der Firma Aldrich oder Clariant GmbH erhältlich ist, eingesetzt. Eine bevorzugte Vinylphosphonsäure weist eine Reinheit von mehr als 70%, insbesondere 90 % und besonders bevorzugt mehr als 97% Reinheit auf.

Die Vinylhaltigen Phosphonsäuren können des weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Vinylhaltigen Phosphonsäuren.

Vinylhaltige Sulfonsäuren sind in der Fachwelt bekannt. Es handelt sich hierbei um Verbindungen, die mindestens eine Kohlenstoff-Kohlenstoff-Doppelbindung und mindestens eine Sulfonsäuregruppe aufweisen. Vorzugsweise weisen die zwei Kohlenstoffatome, die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich die Polyvinylsulfonsäure aus dem Polymerisationsprodukt, das durch Polymerisation der Vinylhaltigen Sulfonsäure allein oder mit weiteren Monomeren und/oder Vernetzern erhalten wird.

Die Vinylhaltige Sulfonsäure kann ein, zwei, drei oder mehr Kohlenstoff-KohlenstoffDoppelbindungen umfassen. Des weiteren kann die Vinylhaltige Sulfonsäure ein, zwei, drei oder mehr Sulfonsäuregruppen enthalten.

Im allgemeinen enthält die Vinylhaltige Sulfonsäure 2 bis 20, vorzugsweise 2 bis 10 Kohlenstoffatome.

Bei der in Schritt B) verwendeten vinylhaltigen Sulfonsäure handelt es sich vorzugsweise Verbindungen der Formel

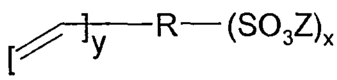

worin

- R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
- Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x eine ganze Zahl 1, 2, 3, 4, 5, 6, 7, 8, 9 oder 10 bedeutet
- y eine ganze Zahl 1, 2, 3, 4, 5, 6, 7, 8, 9 oder 10 bedeutet

und/oder der Formel

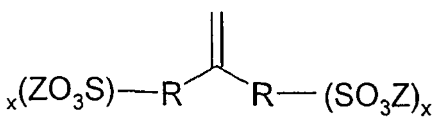

worin

- R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
- Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x eine ganze Zahl 1, 2, 3, 4, 5, 6, 7, 8, 9 oder 10 bedeutet

und/oder der Formel

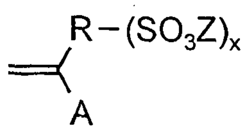

worin

A eine Gruppe der Formeln $COOR^2$, CN, $CONR^2{}_2$, $OR^2$ und/oder $R^2$ darstellt, worin $R^2$ Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können

R eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, $NZ_2$ substituiert sein können,

Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und

x eine ganze Zahl 1, 2, 3, 4, 5, 6, 7, 8, 9 oder 10 bedeutet.

Zu den bevorzugten Vinylhaltigen Sulfonsäuren gehören unter anderem Alkene, die Sulfonsäuregruppen aufweisen, wie Ethensulfonsäure, Propensulfonsäure, Butensulfonsäure; Acrylsäure- und/oder Methacrylsäure-Verbindungen, die Sulfonsäuregruppen aufweisen, wie beispielsweise 2-Sulfomethyl-acrylsäure, 2-Sulfomethyl-methacrylsäure, 2-Sulfomethyl-acrylsäureamid und 2-Sulfomethylmethacrylsäureamid.

Besonders bevorzugt wird handelsübliche Vinylsulfonsäure (Ethensulfonsäure), wie diese beispielsweise von der Firma Aldrich oder Clariant GmbH erhältlich ist, eingesetzt. Eine bevorzugte Vinylsulfonsäure weist eine Reinheit von mehr als 70%, insbesondere 90 % und besonders bevorzugt mehr als 97% Reinheit auf.

Die Vinylhaltigen Sulfonsäuren können des weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Vinylhaltigen Sulfonsäuren.

Die in Schritt B) und Schritt C) verwendete Mischung enthält entweder Vinylhaltige Phosphonsäure-Monomere oder Vinylhaltige Sulfonsäure-Monomere und vinylhaltige Phosphonsäure Monomere. Das Mischungsverhältnis Vinylhaltige Sulfonsäure-Monomere zu Vinylhaltigen Phosphonsäure-Monomeren beträgt vorzugsweise zwischen 1:99 und 99:1, vorzugsweise 1:50 und 50:1, insbesondere 1:25 und 25:1.

Der Gehalt an Vinylsulfonsäure Monomeren in Zusammensetzungen, die zum Pfropfen eingesetzt werden, beträgt bevorzugt mindestens 1 Gew.-%, vorzugsweise mindestens 5 Gew.-%, besonders bevorzugt zwischen 10 und 97 Gew.-%.

Der Gehalt an Vinylphosphonsäure Monomeren in Zusammensetzungen, die zum Pfropfen eingesetzt werden, beträgt bevorzugt mindestens 3 Gew.-%, vorzugsweise mindestens 5 Gew.-%, besonders bevorzugt zwischen 10 und 99 Gew.-%.

Die Vinylhaltige Phosphonsäure umfassende Flüssigkeit kann eine Lösung darstellen, wobei die Flüssigkeit auch suspendierte und/oder dispergierte Bestandteile enthalten kann. Die Viskosität der Vinylhaltige Phosphonsäure umfassenden Flüssigkeit kann in weiten Bereichen liegen, wobei zur Einstellung der Viskosität eine Zugabe von Lösungsmitteln oder eine Temperaturerhöhung erfolgen kann. Vorzugsweise liegt die dynamische Viskosität im Bereich von 0,1 bis 10000 mPa*s, insbesondere 0,2 bis 2000 mPa*s, wobei diese Werte beispielsweise gemäß DIN 53015 gemessen werden können.

Die vinylhaltige Phosphonsäure-Zusammensetzung, die zum Pfropfen eingesetzt wird, kann zusätzlich Lösungsmittel enthalten, wobei jedes organische oder anorganische Lösungsmittel eingesetzt werden kann. Zu den organischen Lösungsmitteln gehören insbesondere polar aprotische Lösungsmittel, wie Dimethylsulfoxid (DMSO), Ester, wie Ethylacetat, und polar protische Lösungsmittel, wie Alkohole, wie Ethanol, Propanol, Isopropanol und/oder Butanol. Zu den anorganischen Lösungsmittel zählen insbesondere Wasser, Phosphorsäure und Polyphosphorsäure. Diese können die Verarbeitbarkeit positiv beeinflussen. Insbesondere kann durch Zugabe des organischen Lösungsmittels die Einarbeitung des vinylhaltigen Monomeren in die Polymerfolie verbessert werden.

In einer weiteren Ausführungsform der Erfindung enthalten die Vinylhaltigen Phosphonsäure/Sulfonsäure Monomeren weitere zur Vernetzung befähigte Monomere. Bei diesen handelt es sich insbesondere um Verbindungen, die mindestens 2 Kohlenstoff-Kohlenstoff Doppelbindungen aufweisen. Bevorzugt werden Diene, Triene, Tetraene, Dimethylacrylate, Trimethylacrylate, Tetramethylacrylate, Diacrylate, Triacrylate, Tetraacrylate.

Besonders bevorzugt sind Diene, Triene, Tetraene der Formel

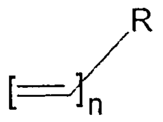

Dimethylacrylate, Trimethylycrylate, Tetramethylacrylate der Formel

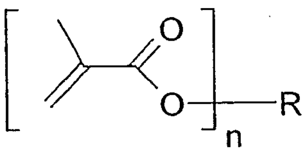

Diacrylate, Triacrylate, Tetraacrylate der Formel

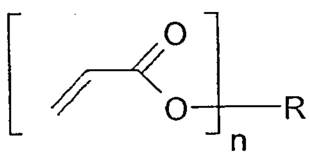

worin

- R eine C1-C15-Alkylgruppe, C5-C20-Aryl oder Heteroarylgruppe, NR', $-SO_2$, PR', $Si(R')_2$ bedeutet, wobei die vorstehenden Reste ihrerseits substituiert sein können,
- R' unabhängig voneinander Wasserstoff, eine C1-C15-Alkylgruppe, C1-C15-Alkoxygruppe, C5-C20-Aryl oder Heteroarylgruppe bedeutet und
- n mindestens 2 ist.

Bei den Substituenten des vorstehenden Restes R handelt es sich vorzugsweise um Halogen, Hydroxyl, Carboxy, Carboxyl, Carboxylester, Nitrile, Amine, Silyl, Siloxan Reste.

Besonders bevorzugte Vernetzer sind Allylmethacrylat, Ethylenglykoldimethacrylat, Diethylenglykoldimethacrylat, Triethylenglykoldimethacrylat, Tetra- und Polyethylenglykoldimethacrylat, 1,3-Butandioldimethacrylat, Glycerindimethacrylat, Diurethandimethacrylat, Trimethylpropantrimethacrylat, N', N-Methylenbisacrylamid, Carbinol, Butadien, Isopren, Chloropren, Divinylbenzol und/oder Bisphenol-A-dimethylacrylat.

Die Vernetzer werden zwischen 0,5 bis 30 Gew.-% bezogen auf die Vinylhaltige Phosphonsäure bzw. Vinylhaltige Sulfonsäure bzw. deren Gemisch eingesetzt.

Das Aufbringen der Vinylphosphon-/Vinylsulfonsäurehaltigen Monomer-Flüssigkeit kann mittels an sich bekannter Maßnahmen (z.B. Sprühen, Tauchen etc.) die aus dem Stand der Technik bekannt sind, erfolgen.

Die Polymerisation der Vinylhaltigen Phosphon-/Sulfonsäure Monomeren in Schritt B) erfolgt bei Temperaturen oberhalb Raumtemperatur (20°C) und kleiner 200°C, vorzugsweise bei Temperaturen zwischen 40°C und 150°C, insbesondere zwischen 50°C und 120°C. Die Polymerisation erfolgt vorzugsweise unter Normaldruck, kann aber auch unter Einwirkung von Druck erfolgen. Die Polymerisation erfolgt vorzugsweise unter Intergas wie Stickstoff. Die Polymerisation führt zu einer Zunahme des Volumens und des Gewichtes. Der Pfropfgrad, charakterisiert durch die Gewichtszunahme während des Pfropfens beträgt mindestens 10%, vorzugsweise grösser 20% und ganz besonders bevorzugt grösser 50%.

Der Pfropfgrad wird aus der Masse des trockenen Filmes vor dem Pfropfen, $m_0$, und der Masse des getrockneten Filmes nach dem Pfropfen und Waschen (gemäß Schritt D), $m_1$, berechnet gemäss

$$\text{Pfropfgrad}=(m_1-m_0)/m_0 * 100$$

Nach einmaligem Durchlaufen der Schritte A), B) und C) können diese in der beschriebenen Abfolge mehrmals wiederholt werden. Die Anzahl der Wiederholungen richtet sich nach dem gewünschten Pfropfgrad.

Die in Schritt C) erhaltene Membran enthält zwischen 0,5 und 94 Gew.-% des organischen Polymeren sowie zwischen 99,5 und 6 Gew.-% Polyvinylphosphonsäure oder Polyvinylsulfonsäure und Polyvinylphosphonsäure. Bevorzugt enthält die in Schritt C) erhaltene Membran zwischen 3 und 90 Gew.-% des organischen Polymeren sowie zwischen 97 und 10 Gew.-% Polyvinylphosphonsäure oder Polyvinylsulfosäure und Polyvinylphosphonsäure.

In einem weiteren Schritt D) kann die erfindungsgemäß hergestellte gepfropfte Membran durch Waschen mit Wasser oder Alkoholen wie Methanol, 1-Propanol, Isopropanol oder Butanol bzw. Mischungen von nicht umgesetzten Bestandteilen befreit. Das Waschen findet bei Temperaturen von Raumtemperatur (20°C) bis 100°C, insbesondere bei Raumtemperatur bis 80°C und ganz besonders bevorzugt bei Raumtemperatur bis 60°C statt.

Gemäß einer besonderen Ausführungsform der vorliegenden Erfindung umfasst die Membran mindestens 3 Gew.-%, vorzugsweise mindestens 5 Gew.-% und besonders bevorzugt mindestens 7 Gew.-% Phosphor (als Element), bezogen auf das Gesamtgewicht der Membran. Der Anteil an Phosphor kann über eine Elementaranalyse bestimmt werden. Hierzu wird die Membran bei 110°C für 3 Stunden im Vakuum (1 mbar) getrocknet. Besonders bevorzugt wird dieser Anteil nach dem optionalen Schritt D) bestimmt.

Im Anschluß an Schritt C) oder an die Behandlung gemäß Schritt D) kann die Membran durch Einwirken von Hitze in Gegenwart von Luftsauerstoff an der Oberfläche noch vernetzt werden. Diese Härtung der Membranoberfläche verbessert die Eigenschaften der Membran zusätzlich.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit β-Strahlen. Die Strahlungsdosis beträgt hierbei zwischen 5 und 200 kGy.

Zusätzlich kann die erfindungsgemäße Polymermembran noch weitere Füll- und/oder Hilfsstoffe enthalten.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann entweder bei Schritt A erfolgen oder nach der Polymerisation.

Nicht limitierende Beispiele für Protonenleitende Füllstoffe sind

| | |
|---|---|
| Sulfate wie: | $CsHSO_4$, $Fe(SO_4)_2$, $(NH_4)_3H(SO_4)_2$, $LiHSO_4$, $NaHSO_4$, $KHSO_4$, $RbSO_4$, $LiN_2H_5SO_4$, $NH_4HSO_4$, |
| Phosphate wie | $Zr_3(PO_4)_4$, $Zr(HPO_4)_2$, $HZr_2(PO_4)_3$, $UO_2PO_4.3H_2O$, $H_8UO_2PO_4$, $Ce(HPO_4)_2$, $Ti(HPO_4)_2$, $KH_2PO_4$, $NaH_2PO_4$, $LiH_2PO_4$, $NH_4H_2PO_4$, $CsH_2PO_4$, $CaHPO_4$, $MgHPO_4$, $HSbP_2O_8$, $HSb_3P_2O_{14}$, $H_5Sb_5P_2O_{20}$, |
| Polysäure wie | $H_3PW_{12}O_{40}.nH_2O$ (n=21-29), $H_3SiW_{12}O_{40}.nH_2O$ (n=21-29), $H_xWO_3$, $HSbWO_6$, $H_3PMo_{12}O_{40}$, $H_2Sb_4O_{11}$, $HTaWO_6$, $HNbO_3$, $HTiNbO_5$, $HTiTaO_5$, $HSbTeO_6$, $H_5Ti_4O_9$, $HSbO_3$, $H_2MoO_4$ |
| Selenide und Arsenide wie | $(NH_4)_3H(SeO_4)_2$, $UO_2AsO_4$, $(NH_4)_3H(SeO_4)_2$, $KH_2AsO_4$, $Cs_3H(SeO_4)_2$, $Rb_3H(SeO_4)_2$, |
| Oxide wie | $Al_2O_3$, $Sb_2O_5$, $ThO_2$, $SnO_2$, $ZrO_2$, $MoO_3$ |
| Silikate wie | Zeolithe, Zeolithe($NH_4$+), Schichtsilikate, Gerüstsilikate, H-Natrolite, H-Mordenite, $NH_4$-Analcine, $NH_4$-Sodalite, $NH_4$-Gallate, H-Montmorillonite |
| Säuren wie | $HClO_4$, $SbF_5$ |
| Füllstoffe wie | Carbide, insbesondere SiC, $Si_3N_4$, Fasern, insbesondere Glasfasern, Glaspulvern und/oder Polymerfasern, bevorzugt auf Basis von Polyazolen. |

Diese Additive können in der protonenleitenden Polymermembran in üblichen Mengen enthalten sein, wobei jedoch die positiven Eigenschaften, wie hohe Leitfähigkeit, hohe Lebensdauer und hohe mechanische Stabilität der Membran durch Zugabe von zu großen Mengen an Additiven nicht allzu stark beeinträchtigt werden sollten. Im allgemeinen umfaßt die Membran nach der Polymerisation gemäß Schritt C) höchstens 80 Gew.-%, vorzugsweise höchstens 50 Gew.-% und besonders bevorzugt höchstens 20 Gew.-% Additive.

Als weiteres kann diese Membran auch perfluorierte Sulfonsäure Additive (0,1-20 wt%, bevorzugt 0,2-15 wt%, ganz bevorzugt 0,2- 10 wt%) enthalten. Diese Additive führen zur Leistungsverbesserung, in der Nähe der Kathode zur

Erhöhung der Sauerstofflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.)

Nicht limitierende Beispiele für persulfonierte Additive sind: Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Als weiteres kann die Membran auch als Additive enthalten, die die im Betrieb bei der Sauerstoffreduktion erzeugten Peroxidradikale abfangen (primäre Anitoxidanzien) oder zerstören (sekundäre Antioxidanzien) und dadurch wie in JP2001118591 A2 beschrieben Lebensdauer und Stabilität der Membran und Membranelektrodeneinheit verbessern. Die Funktionsweise und molekularen Strukturen solcher Additive sind in F. Gugumus in Plastics Additives, Hanser Verlag, 1990; N.S. Allen, M. Edge Fundamentals of Polymer Degradation and Stability, Elsevier, 1992; oder H. Zweifel, Stabilization of Polymeric Materials, Springer, 1998 beschrieben.

Nicht limitierende Beispiele für solche Additive sind:

Bis(trifluormethyl)nitroxid, 2,2-Diphenyl-1-pikrinylhydrazyl, Phenole, Alkylphenole, sterisch gehinderte Alkylphenole wie zum Beispiel Irganox, insbesondere Irganox 1135 (Ciba Geigy), aromatische Amine, sterisch gehinderte Amine wie zum Beispiel Chimassorb; sterisch gehinderte Hydroxylamine, sterisch gehinderte Alkylamine, sterisch gehinderte Hydroxylamine, sterisch gehinderte Hydroxylaminether, Phosphite wie zum Beispiel Irgafos, Nitrosobenzol, Methyl.2-nitrosopropan, Benzophenon, Benzaldehyd-tert.-butylnitron, Cysteamin, Melanine, Bleioxide, Manganoxide, Nickeloxide und Cobaltoxide.

Die erfindungsgemäße Polymermembran weist verbesserte Materialeigenschaften gegenüber den bisher bekannten mit Säure dotierten Polymermembranen auf. Insbesondere zeigen sie im Vergleich mit bekannten undotierten Polymermembranen bereits eine intrinsische Leitfähigkeit bei Temperaturen oberhalb 100°C und ohne Befeuchtung. Diese begründet sich insbesondere durch eine kovalent an das Polymergerüst gebundene polymere Polyvinylphosphonsäure und Polyvinylsulfonsäure.

Die Eigenleitfähigkeit der erfindungsgemäßen Membran beträgt bei Temperaturen von 80°C, gegebenenfalls mit Befeuchtung, im allgemeinen mindestens 0,1 mS/cm, bevorzugt mindestens 1 mS/cm, insbesondere mindestens 2 mS/cm und besonders bevorzugt mindestens 5 mS/cm.

Bei einem Gewichtsanteil an Polyvinylphosphonsäure größer als 10%, bezogen auf das Gesamtgewicht der Membran, zeigen die Membranen im allgemeinen eine Leitfähigkeit bei Temperaturen von 160°C von mindestens 1 mS/cm, bevorzugt mindestens 3 mS/cm, insbesondere mindestens 5 mS/cm und besonders bevorzugt mindestens 10 mS/cm. Diese Werte werden hierbei ohne Befeuchtung erzielt.

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-1 00 Thermoelement geregelt. Nach Erreichen der Temperatur wird die Probe vor dem Start der Messung 10 Minuten auf dieser Temperatur gehalten.

Die Durchtritts-Stromdichte beträgt bei Betrieb mit 0,5 M Methanollösung und 90°C in einer so genannten flüssigen Direktmethanolbrennstoffzelle vorzugsweise weniger als 100 $mA/cm^2$, insbesondere weniger als 70 $mA/cm^2$ besonders bevorzugt weniger als 50 $mA/cm^2$ und ganz besonders bevorzugt weniger als 10 $mA/cm^2$. Die Durchtritts-Stromdichte beträgt bei Betrieb mit einer 2 M Methanollösung und 160°C in einer so genannten gasförmigen Direktmethanolbrennstoffzelle vorzugsweise weniger als 100 $mA/cm^2$, insbesondere weniger als 50 $mA/cm^2$ ganz besonders bevorzugt weniger als 10 $mA/cm^2$.

Zur Bestimmung der Durchtritts-Stromdichte (cross over current density) wird die Kohlendioxidmenge, die an der Kathode freigesetzt wird, mittels eines $CO_2$-Sensors gemessen. Aus dem so erhaltenen Wert der $CO_2$-Menge wird, wie von P. Zelenay, S.C. Thomas, S. Gottesfeld in S. Gottesfeld, T.F. Fuller "Proton Conducting Membrane Fuel Cells II" ECS Proc. Vol. 98-27 S. 300-308 beschrieben, die Durchtritts-Stromdichte berechnet.

Zu möglichen Einsatzgebieten der erfindungsgemäßen Polymermembranen gehören unter anderem die Verwendung in Brennstoffzellen, bei der Elektrolyse, in Kondensatoren und in Batteriesystemen. Aufgrund ihres Eigenschaftsprofils werden die Polymermembranen vorzugsweise in Brennstoffzellen, ganz besonders bevorzugt in Direkt-Methanol Brennstoffzellen, verwendet.

Die vorliegende Erfindung betrifft auch eine Membran-Elektroden-Einheit, die mindestens eine erfindungsgemäße Polymermembran aufweist. Die Membran-Elektroden-Einheit weist eine hohe Leistungsfähigkeit auch bei einem geringen Gehalt an katalytisch aktiven Substanzen, wie beispielsweise Platin, Ruthenium oder Palladium, auf. Hierzu können mit einer katalytisch aktiven Schicht versehene Gasdiffusionslagen eingesetzt werden.

Die Gasdiffusionslage zeigt im allgemeinen eine Elektronenleitfähigkeit. Üblich werden hierfür flächige, elektrisch leitende und säureresistente Gebilde eingesetzt. Zu diesen gehören beispielsweise Kohlefaser-Papiere, graphitisierte Kohlefaser-Papiere, Kohlefasergewebe, graphitisierte Kohlefasergewebe und/oder flächige Gebilde, die durch Zugabe von Ruß leitfähig gemacht wurden.

Die katalytisch aktive Schicht enthält eine katalytisch aktive Substanz. Zu diesen gehören unter anderem Edelmetalle, insbesondere Platin, Palladium, Rhodium, Iridium und/oder Ruthenium. Diese Substanzen können auch in Form von Legierungen unter einander eingesetzt werden. Des weiteren können diese Substanzen auch in Legierung mit unedlen Metallen, wie beispielsweise Cr, Zr, Ni, Co und/oder Ti verwendet werden. Darüber hinaus können auch die Oxide der zuvor genannten Edelmetalle und/oder unedlen Metalle eingesetzt werden.
Gemäß einem besonderen Aspekt der vorliegenden Erfindung werden die katalytisch aktiven Verbindungen in Form von Partikeln eingesetzt, die vorzugsweise eine Größe im Bereich von 1 bis 1000 nm, insbesondere 10 bis 200 nm und bevorzugt 20 bis 100 nm aufweisen.

Des weiteren kann die katalytisch aktive Schicht übliche Additive enthalten. Hierzu gehören unter anderem Fluorpolymere wie z.B. Polytetrafluorethylen (PTFE) und oberflächenaktive Substanzen.

Gemäß einer besonderen Ausführungsform der vorliegenden Erfindung ist das Gewichtsverhältnis von Fluorpolymer zu Katalysatormaterial, umfassend mindestens ein Edelmetall und gegebenenfalls ein oder mehrere Trägermaterialien, größer als 0,1, wobei dieses Verhältnis vorzugsweise im Bereich von 0,2 bis 0,6 liegt.

Gemäß einer besonderen Ausführungsform der vorliegenden Erfindung weist die Katalysatorschicht eine Dicke im Bereich von 1 bis 1000 μm, insbesondere von 5 bis 500, vorzugsweise von 10 bis 300 μm auf. Dieser Wert stellt einen Mittelwert dar, der durch Messung der Schichtdicke im Querschnitt von Aufnahmen bestimmt werden kann, die mit einem Rasterelektronenmikroskop (REM) erhalten werden können.

Nach einer besonderen Ausführungsform der vorliegenden Erfindung beträgt der Edelmetallgehalt der Katalysatorschicht 0,1 bis 10,0 mg/cm$^2$, vorzugsweise 0,2 bis 6,0 mg/cm$^2$ und besonders bevorzugt 0,3 bis 3,0 mg/cm$^2$. Diese Werte können durch Elementaranalyse einer flächigen Probe bestimmt werden.

Für weitere Informationen über Membran-Elektroden-Einheiten wird auf die Fachliteratur, insbesondere auf die Patentanmeldungen WO 01/18894 A2, DE-A-195 09 748, DE-A-195 09 749, WO 00/26982, WO 92/15121 und DE-A-197 57 492 verwiesen. Die in den vorstehend genannten Literaturstellen enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

In einer weiteren Variante kann auf die erfindungsgemäße Membran eine katalytisch aktive Schicht aufgebracht werden und diese mit einer Gasdiffusionslage verbunden werden.

Ebenfalls Gegenstand der vorliegenden Erfindung ist eine Membran-Elektroden-Einheit, die mindestens eine erfindungsgemäße Polymermembran ggf. in Kombination mit einer weiteren Polymermembran auf Basis von Polyazolen oder einer Polymerblendmembran enthält.

## Patentansprüche

1. Protonenleitende Elektrolytmembran erhältlich durch ein Verfahren umfassend die Schritte

    A. Bestrahlen eines flächigen Gebildes umfassend mindestens ein Polymer mit Strahlung unter Erzeugung von Radikalen,
    B. Aufbringen einer Flüssigkeit enthaltend Vinylphosphonsäurehaltige Monomere oder Vinylphosphonsäurehaltige und Vinylsulfonsäurehaltige Monomere auf mindestens eine Fläche der Folie,
    C. Polymerisation der in Schritt B) eingebrachten Vinylhaltigen Monomeren, **dadurch gekennzeichnet, daß** die Membran eine Eigenleitfähigkeit von mindestens 0,001 S/cm gemessen ohne Befeuchtung aufweist.

2. Membran gemäß Anspruch 1, **dadurch gekennzeichnet, daß** es sich bei dem in Schritt A) eingesetzten Polymeren um Polymere, die mindestens ein Fluor, Stickstoff-, Sauerstoff- und/oder Schwefelatom in einer oder in unterschiedlichen Wiederholungseinheit enthalten, handelt, das als Folie oder Schicht vorliegt.

3. Membran gemäß Anspruch 1, **dadurch gekennzeichnet, daß** es sich bei der in Schritt B) verwendeten Vinylhaltigen Phosphonsäure Monomeren um Verbindungen der Formel

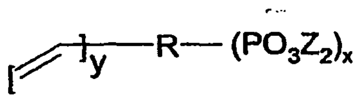

worin

R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet
y eine ganze Zahl 1, 2, 3, 4, 5, 6, 7, 8, 9 oder 10 bedeutet

und/oder der Formel

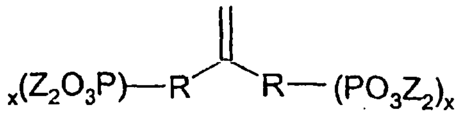

worin

R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet

und/oder der Formel

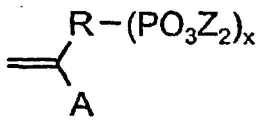

worin

A eine Gruppe der Formeln $COOR^2$, CN, $CONR^2_2$, $OR^2$ und/oder $R^2$ darstellt,
worin $R^2$ Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können
R eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet,

handelt.

**4.** Membran gemäß Anspruch 1, **dadurch gekennzeichnet, daß** es sich bei der in Schritt B) verwendeten Vinylhaltigen Sulfonsäure Monomeren um Verbindungen der Formel

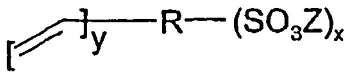

worin

R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet
y eine ganze Zahl 1, 2, 3, 4, 5, 6, 7, 8, 9 oder 10 bedeutet

und/oder der Formel

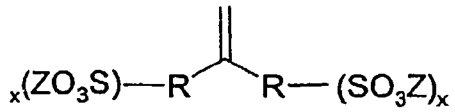

worin

R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet

und/oder der Formel

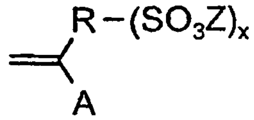

worin

A eine Gruppe der Formeln $COOR^2$, CN, $CONR^2_2$, $OR^2$ und/oder $R^2$ darstellt,
worin $R^2$ Wasserstoff, eine C1-C15-Alkyfgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können
R eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet,

handelt.

5. Membran gemäß Anspruch 1, **dadurch gekennzeichnet, daß** die Lösungen von Vinylhaltigen Phosphonsäure/Sulfonsäure Monomer weitere zur Vernetzung befähigte Monomere enthalten.

6. Membran gemäß Anspruch 1, enthaltend zwischen 0,5 und 94 Gew.-% des Polymeren definiert in Anspruch 2 und zwischen 99,5 und 6 Gew.-% Polyvinylphosphonsäure und Polyvinylsulfonsäure erhältlich durch Polymerisation der Monomeren definiert in Anspruch 3 und 4.

7. Membran-Elektroden-Einheit enthaltend mindestens eine Elektrode und mindestens eine Membran gemäß einem oder mehreren der Ansprüche 1 bis 6.

8. Brennstoffzelle enthaltend eine oder mehrere Membran-Elektroden-Einheiten gemäß Anspruch 7 und/oder eine oder mehrere Membranen gemäß einem der Ansprüche 1 bis 6.

## Claims

1. Proton-conducting electrolyte membrane obtainable by a process comprising the steps:

A. irradiation of a sheet-like structure comprising at least one polymer with radiation to generate free radicals,
B. application of a liquid comprising a monomer comprising vinylphosphonic acid or vinylphosphonic and vinylsulfonic acid to at least one surface of the film,
C. polymerization of the monomers comprising vinyl introduced in step B), **characterized in that** the membrane has an intrinsic conductivity measured without moisture of at least 0.001 S/cm.

2. Membrane according to Claim 1, **characterized in that** the polymer used in step A) is a polymer containing at least one fluorine, nitrogen, oxygen and/or sulfur atom in a repeating unit or in different repeating units, and which is a film or layer.

3. Membrane according to Claim 1, **characterized in that** the vinyl-containing phosphonic acid monomer used in step B) is a compound of the formula

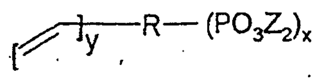

where

R is a bond, a C1-C15-alkyl group, C1-C15-alkoxy group, ethylenoxy group or C5-C20-aryl or heteroaryl group, with the above radicals themselves being able to be substituted by halogen, -OH, COOZ, -CN, $NZ_2$,
the radicals Z are each, independently of one another, hydrogen, a C1-C15-alkyl group, C1-C15-alkoxy group, ethylenoxy group or C5-C20-aryl or heteroaryl group, with the above radicals themselves being able to be substituted by halogen, -OH, -CN, and
x is 1, 2, 3, 4, 5, 6, 7, 8, 9 or 10,
y is 1, 2, 3, 4, 5, 6, 7, 8, 9 or 10,

and/or of the formula

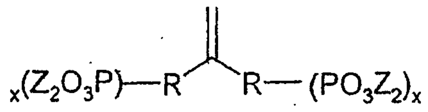

where

R is a bond, a C1-C15-alkyl group, C1-C15-alkoxy group, ethylenoxy group or C5-C20-aryl or heteroaryl group, with the above radicals themselves being able to be substituted by halogen, -OH, COOZ, -CN, $NZ_2$,
the radicals Z are each, independently of one another, hydrogen, a C1-C15-alkyl group, C1-C15-alkoxy group, ethylenoxy group or C5-C20-aryl or heteroaryl group, with the above radicals themselves being able to be substituted by halogen, -OH, -CN, and
x is 1, 2, 3, 4, 5, 6, 7, 8, 9 or 10,

and/or of the formula

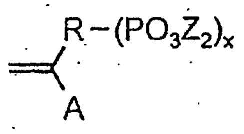

where

A is a group of the formulae $COOR^2$, CN, $CONR^2{}_2$, $OR^2$ and/or $R^2$,
where $R^2$ is hydrogen, a C1-C15-alkyl group, C1-C15-alkoxy group, ethylenoxy group or C5-C20-aryl or heteroaryl group, with the above radicals themselves being able to be substituted by halogen, -OH, COOZ, -CN, $NZ_2$,
R is a bond, a divalent C1-C15-alkylene group, divalent C1-C15-alkylenoxy group, for example ethylenoxy group, or divalent C5-C20-aryl or heteroaryl group, with the above radicals themselves being able to be substituted by halogen, -OH, COOZ, -CN, $NZ_2$,
the radicals Z are each, independently of one another, hydrogen, a C1-C15-alkyl group, C1-C15-alkoxy group, ethylenoxy group or C5-C20-aryl or heteroaryl group, with the above radicals themselves being able to be substituted by halogen, -OH, -CN, and
x is 1, 2, 3, 4, 5, 6, 7, 8, 9 or 10.

**4.** Membrane according to Claim 1, **characterized in that** the vinyl-containing sulfonic acid monomer used in step B) is a compound of the formula

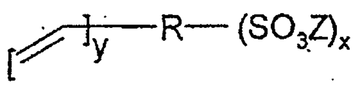

where

R is a bond, a C1-C15-alkyl group, C1-C15-alkoxy group, ethylenoxy group or C5-C20-aryl or heteroaryl group, with the above radicals themselves being able to be substituted by halogen, -OH, COOZ, -CN, $NZ_2$,
the radicals Z are each, independently of one another, hydrogen, a C1-C15-alkyl group, C1-C15-alkoxy group, ethylenoxy group or C5-C20-aryl or heteroaryl group, with the above radicals themselves being able to be substituted by halogen, -OH, -CN, and
x is 1, 2, 3, 4, 5, 6, 7, 8, 9 or 10,
y is 1, 2, 3, 4, 5, 6, 7, 8, 9 or 10,

and/or of the formula

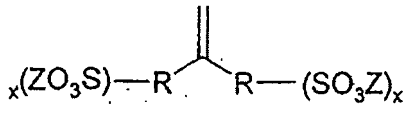

where

R is a bond, a C1-C15-alkyl group, C1-C15-alkoxy group, ethylenoxy group or C5-C20-aryl or heteroaryl group, with the above radicals themselves being able to be substituted by halogen, -OH, COOZ, -CN, $NZ_2$,
the radicals Z are each, independently of one another, hydrogen, a C1-C15-alkyl group, C1-C15-alkoxy group, ethylenoxy group or C5-C20-aryl or heteroaryl group, with the above radicals themselves being able to be substituted by halogen, -OH, -CN, and
x is 1, 2, 3, 4, 5, 6, 7, 8, 9 or 10,

and/or of the formula

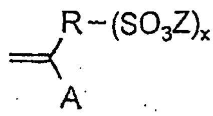

where

A is a group of the formulae $COOR^2$, CN, $CONR^2_2$, $OR^2$ and/or $R^2$,
where $R^2$ is hydrogen, a C1-C15-alkyl group, C1-C15-alkoxy group, ethylenoxy group or C5-C20-aryl or heteroaryl group, with the above radicals themselves being able to be substituted by halogen, -OH, COOZ, -CN, $NZ_2$,
R is a bond, a divalent C1-C15-alkylene group, divalent C1-C15-alkylenoxy group, for example ethylenoxy group, or divalent C5-C20-aryl or heteroaryl group, with the above radicals themselves being able to be substituted by halogen, -OH, COOZ, -CN, $NZ_2$,
the radicals Z are each, independently of one another, hydrogen, a C1-C15-alkyl group, C1-C15-alkoxy group, ethylenoxy group or C5-C20-aryl or heteroaryl group, with the above radicals themselves being able to be substituted by halogen, -OH, -CN, and
x is 1, 2, 3, 4, 5, 6, 7, 8, 9 or 10.

5. Membrane according to Claim 1, **characterized in that** the solutions of vinyl-containing phosphonic acid/sulfonic acid monomers further comprise additional monomers capable of crosslinking.

6. Membrane according to Claim 1 comprising from 0.5 to 94% by weight of the polymers defined in claim 2 and from 99.5 to 6% by weight of polyvinylpyhosphonic acid and polyvinylsulfonic acid obtainable by polymerization of the monomers defined in Claims 3 and 4.

7. Membrane-electrode unit comprising at least one electrode and at least one membrane according to one or more of Claims 1 to 6.

8. Fuel cell comprising one or more membrane-electrode units according to Claim 7 and/or one or more membranes according to any of Claims 1 to 6.

### Revendications

1. Membrane électrolytique conductrice de protons pouvant être obtenue par un procédé comprenant les étapes suivantes:

A) l'irradiation d'un objet plat comprenant au moins un polymère avec radiation sous la production de radicaux,

B) l'application d'un liquide, comprenant des monomères contenant l'acide vinylphosphonique et des monomères contenant l'acide vinylsulfonique, sur au moins une surface de la feuille,
C) la polymérisation des monomères contenant du vinyle introduits dans l'étape B), **caractérisée en ce que** la membrane présente une conductibilité propre d'au moins 0,001 S/cm mesurée sans humectation.

**2.** Membrane selon la revendication 1,existant comme feuille ou substrat, **caractérisée en ce que** les polymères utilisés dans l'étape A) sont des polymères contenant au moins un atome de fluor, de nitrogène, d'oxygène, et/ou de soufre dans une unité répétée.

**3.** Membrane selon la revendication 1 existant comme , **caractérisée en ce que** le mélange préparé à l'étape B) des monomères d'acide phosphorique contenant du vinyle utilisés pour des compositions avec la formule

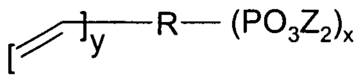

dans laquelle:

R représente une liaison, un groupement alkyle en $C_1$ à $C_{15}$, un groupement alcoxy en $C_5$ à $C_{15}$, un groupement éthylènoxy ou aryle en $C_5$ à $C_{20}$ ou un groupement hétéroaryle, dans lequel les radicaux précédents peuvent être, pour leur part, substitués par un halogène, -OH, COOZ, -CN, $NZ_2$,
les groupements Z représentent, indépendamment les uns des autres, de l'hydrogène, un groupement alkyle en $C_1$ à $C_{15}$, un groupement alcoxy en C1 à $C_{15}$, un groupement éthylèneoxy ou aryle en $C_5$ à $C_{20}$ ou un groupement hétéroaryle, dans lequel les radicaux précédents peuvent être, pour leur part, substitués par un halogène, -OH, -CN, et
x représente un nombre entier valant 1, 2, 3, 4, 5, 6, 7, 8, 9 ou 10,
y représente un nombre entier valant 1, 2, 3, 4, 5, 6, 7, 8, 9 ou 10,

et/ou de formule:

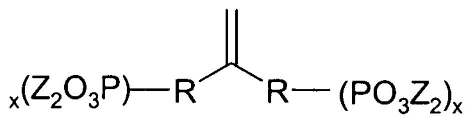

dans laquelle:

R représente une liaison, un groupement alkylène en $C_1$ à $C_{15}$, à double liaison, un groupement alkylèneoxy en $C_1$ à $C_{15}$, à double liaison, par exemple un groupement éthylènoxy ou un groupement aryle ou hétéroaryle en $C_5$ à $C_{20}$ à double liaison, dans lequel les radicaux précédents peuvent, pour leur part, être substitués par un halogène, -OH, COOZ, -CN, $NZ_2$,
les groupements Z représentent, indépendamment les uns des autres, de l'hydrogène, un groupement alkyle en $C_1$ à $C_{15}$, un groupement alcoxy en C1 à $C_{15}$, un groupement éthylèneoxy ou aryle en $C_5$ à $C_{20}$ ou un groupement hétéroaryle, dans lequel les radicaux précédents peuvent être, pour leur part, substitués par un halogène, -OH, -CN, et
X représente un nombre entier valant 1, 2, 3, 4, 5, 6, 7, 8, 9 ou 10, et/ou de formule:

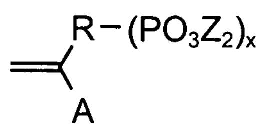

dans laquelle:

A représente un groupement de formules $COOR^2$, CN, $CONR^2{}_2$, $OR_2$ et/ou $R^2$, où R représente de l'hydrogène, un groupement alkyle en C1 à $C_{15}$, un groupement alcoxy en $C_1$ à $C_{15}$, un groupement éthylèneoxy ou un groupement aryle ou hétéroaryle en $C_5$ à $C_{20}$, dans lequel les radicaux précédents peuvent être, pour leur part, substitués par un halogène, -OH, COOZ, -CN, $NZ_2$,
R représente une liaison, un groupement alkylène en $C_1$ à $C_{15}$, à double liaison, un groupement alkylèneoxy en $C_1$ à $C_{15}$, à double liaison, par exemple un groupement éthylènoxy ou un groupement aryle ou hétéroaryle en $C_5$ à $C_{20}$ à double liaison, dans lequel les radicaux précédents peuvent, pour leur part, être substitués par un halogène, -OH, COOZ, -CN, $NZ_2$,
les groupements Z représentent, indépendamment les uns des autres, de l'hydrogène, un groupement alkyle en $C_1$ à $C_{15}$, un groupement alcoxy en C1 à $C_{15}$, un groupement éthylèneoxy ou aryle en $C_5$ à $C_{20}$, dans lequel les radicaux précédents peuvent être, pour leur part, substitués par un halogène, -OH, -CN, et
X représente un nombre entier valant 1, 2, 3, 4, 5, 6, 7, 8, 9 ou 10.

**4.** Membrane selon la revendication 1, **caractérisée en ce que** le mélange préparé à l'étape B) des monomères d'acide sulfonique contenant du vinyle utilisés pour des compositions avec la formule

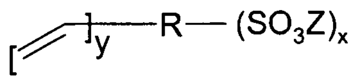

dans laquelle:

R représente une liaison, un groupement alkyle en $C_1$ à $C_{15}$, un groupement alcoxy en $C_5$ à $C_{15}$, un groupement éthylènoxy ou aryle en $C_5$ à $C_{20}$ ou un groupement hétéroaryle, dans lequel les radicaux précédents peuvent être, pour leur part, substitués par un halogène, -OH, COOZ, -CN, $NZ_2$,
les groupements Z représentent, indépendamment les uns des autres, de l'hydrogène, un groupement alkyle en $C_1$ à $C_{15}$, un groupement alcoxy en C1 à $C_{15}$, un groupement éthylèneoxy ou aryle en $C_5$ à $C_{20}$ ou un groupement hétéroaryle, dans lequel les radicaux précédents peuvent être, pour leur part, substitués par un halogène, -OH, -CN, et
x représente un nombre entier valant 1, 2, 3, 4, 5, 6, 7, 8, 9 ou 10,
y représente un nombre entier valant 1, 2, 3, 4, 5, 6, 7, 8, 9 ou 10,

et/ou de formule:

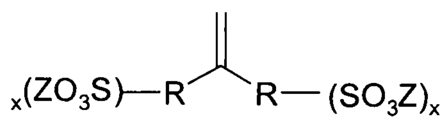

dans laquelle:

R représente une liaison, un groupement alkylène en $C_1$ à $C_{15}$, à double liaison, un groupement alkylèneoxy en $C_1$ à $C_{15}$, à double liaison, par exemple un groupement éthylènoxy ou un groupement aryle ou hétéroaryle en $C_5$ à $C_{20}$ à double liaison, dans lequel les radicaux précédents peuvent, pour leur part, être substitués par un halogène, -OH, COOZ, -CN, $NZ_2$,
les groupements Z représentent, indépendamment les uns des autres, de l'hydrogène, un groupement alkyle en $C_1$ à $C_{15}$, un groupement alcoxy en C1 à $C_{15}$, un groupement éthylèneoxy ou aryle en $C_5$ à $C_{20}$ ou un groupement hétéroaryle, dans lequel les radicaux précédents peuvent être, pour leur part, substitués par un halogène, -OH, -CN, et
X représente un nombre entier valant 1, 2, 3, 4, 5, 6, 7, 8, 9 ou 10, et/ou de formule:

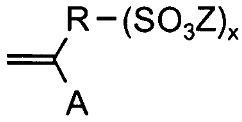

dans laquelle:

A représente un groupement de formules $COOR^2$, CN, $CONR^2_2$, $OR_2$ et/ou $R^2$, où $R^2$ représente de l'hydrogène, un groupement alkyle en C1 à $C_{15}$, un groupement alcoxy en $C_1$ à $C_{15}$, un groupement éthylèneoxy ou un groupement aryle ou hétéroaryle en $C_5$ à $C_{20}$, dans lequel les radicaux précédents peuvent être, pour leur part, substitués par un halogène, -OH, COOZ, -CN, $NZ_2$,
R représente une liaison, un groupement alkylène en $C_1$ à $C_{15}$, à double liaison, un groupement alkylèneoxy en $C_1$ à $C_{15}$, à double liaison, par exemple un groupement éthylènoxy ou un groupement aryle ou hétéroaryle en $C_5$ à $C_{20}$ à double liaison, dans lequel les radicaux précédents peuvent, pour leur part, être substitués par un halogène, -OH, COOZ, -CN, $NZ_2$,
les groupements Z représentent, indépendamment les uns des autres, de l'hydrogène, un groupement alkyle en $C_1$ à $C_{15}$, un groupement alcoxy en C1 à $C_{15}$, un groupement éthylèneoxy ou aryle en $C_5$ à $C_{20}$, dans lequel les radicaux précédents peuvent être, pour leur part, substitués par un halogène, -OH, -CN, et
X représente un nombre entier valant 1, 2, 3, 4, 5, 6, 7, 8, 9 ou 10.

**5.** Membrane selon la revendication 1, **caractérisée en ce que** les solutions de monomères d'acides phosphoniques/sulfoniques contenant du vinyle contiennent aussi d'autres monomères capables pour réticulation.

**6.** Membrane selon la revendication 1, contenant entre 0,5 et 94 % en poids du polymère défini dans la revendication 2 et entre 99,5 et 6 % en poids d'acide polyvinylphosphonique et d'acide polyvinylesulfonique pouvant être obtenus par la polymérisation des monomères définis dans la revendication 3 et 4.

**7.** Unité de membrane-électrode contenant au moins une électrode et au moins une membrane selon une ou plusieurs des revendications 1 à 6.

**8.** Pile à combustible contenant une ou plusieurs unités de membrane électrode selon la revendication 7 et/ou une ou plusieurs membranes selon l'une des revendications 1 à 6.